# EUROPÄISCHE PATENTSCHRIFT

(11) **EP 2 221 492 B1**
(45) Veröffentlichungstag und Bekanntmachung des Hinweises auf die Patenterteilung: **29.06.2011**
(21) Anmeldenummer: 10000474.6
(22) Anmeldetag: 19.01.2010
(51) Int. Cl.: F16C 29/06

(54) **Linearbewegungsvorrichtung mit absatzfreiem Rücklaufdurchgang**
Linear movement device with interruption-free return opening
Dispositif de déplacement linéaire doté d'un passage de retour sans débit

(30) Priorität: 16.02.2009 DE 102009009012
(43) Veröffentlichungstag der Anmeldung: 25.08.2010
(73) Patentinhaber: ROBERT BOSCH GMBH, 70469 Stuttgart (DE)
(72) Erfinder: Keller, Bernhard, 97535 Kaisten (DE); Pfister, Steffen, 97464 Niederwerrn (DE)
(74) Vertreter: Maiß, Harald

(56) Entgegenhaltungen:
- EP-A1- 1 517 056
- DE-A1- 19 956 296
- US-A- 4 921 361
- US-A1- 2006 098 903

## Beschreibung

Die Erfindung betrifft eine Linearbewegungsvorrichtung gemäß dem Oberbegriff von Anspruch 1. Derartige Linearbewegungsvorrichtungen sind beispielsweise als Kugel- oder Rollenschienenführungen bekannt, wobei die erste Baugruppe der Führungswagen und die zweite Baugruppe die Führungsschiene ist. Die Erfindung ist aber auch in Linearmodulen anwendbar, bei denen eine Linearführung mit einer zugeordneten Antriebsvorrichtung zu einer Baueinheit integriert ist. Als Anwendungsgebiet kommen auch Wälzkörpergewindetriebe in Frage, wobei die erste Baugruppe von der Mutter und die zweite Baugruppe von der Gewindespindel verkörpert wird.

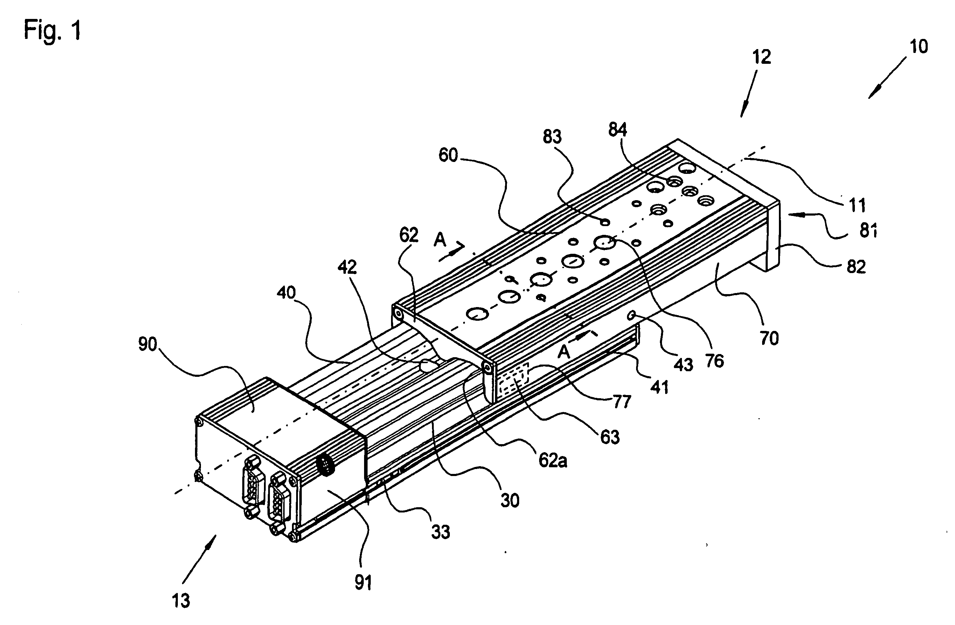

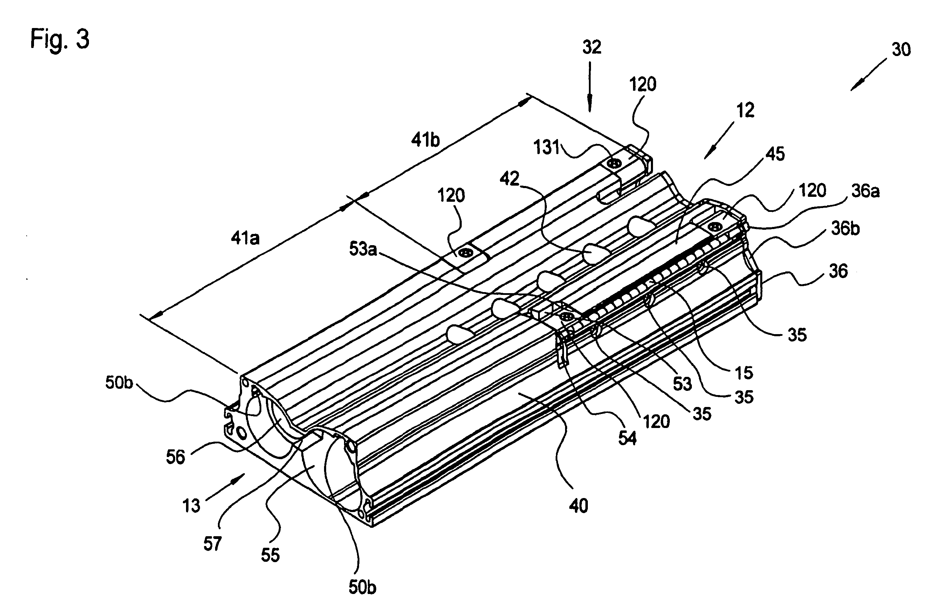

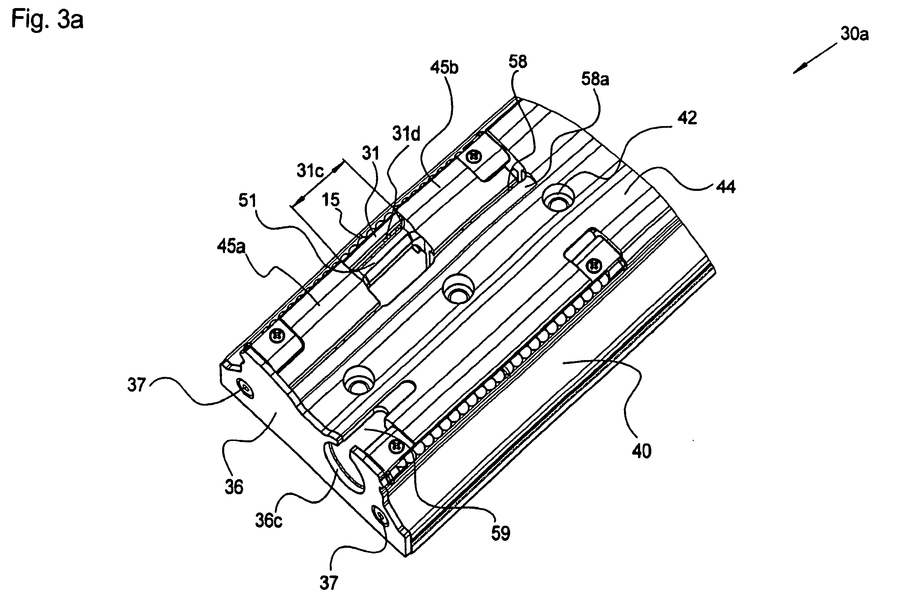

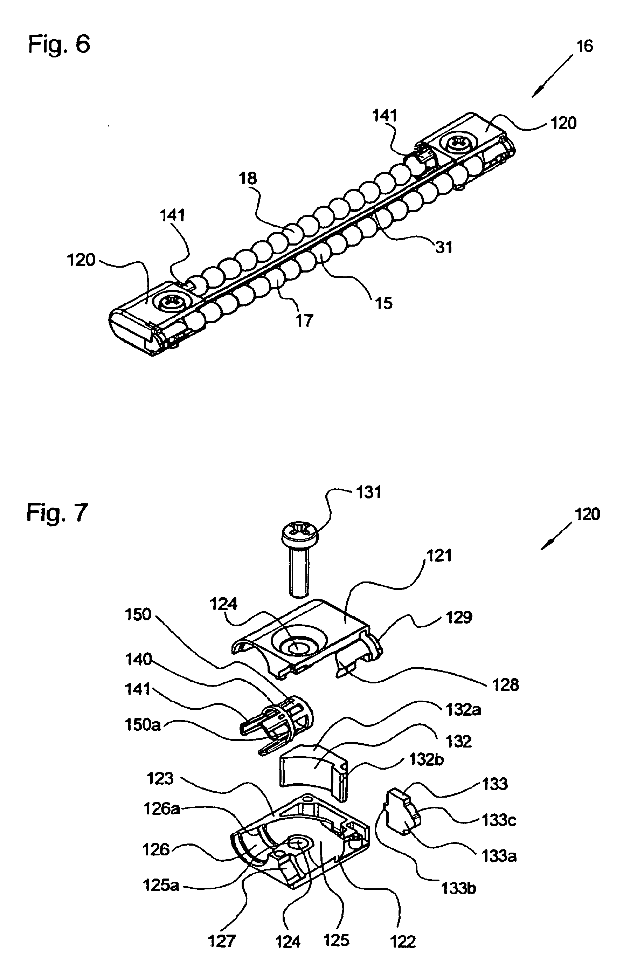

Aus der US 5 193 914 ist eine Linearbewegungsvorrichtung in Form einer Rollenschienenführung bekannt. Gemäß der Fig. 1 der US 5 193 914 umfasst die Linearbewegungsvorrichtung eine erste Baugruppe 1 in Form eines Führungswagens. Die erste Baugruppe ist längsbeweglich gegenüber einer zweiten Baugruppe 2 in Form einer Führungsschiene. Hierfür sind an der ersten Baugruppe insgesamt vier sich in eine Längsrichtung erstreckende erste Wälzflächen 9; 10; 11; 12 vorgesehen, der zweite Wälzflächen 5; 6; 7; 8 an der zweiten Baugruppe gegenüberstehen. Zwischen den genannten Wälzflächen ist je eine Reihe von rollenförmigen Wälzkörpern angeordnet, die jeweils in der ersten Baugruppe bzw. im Führungswagen endlos umlaufen können. Zu diesem Zweck sind in der ersten Baugruppe insgesamt vier Rücklaufdurchgänge 15; 17; 20; 21 vorgesehen. Die erste Baugruppe umfasst einen ersten Grundkörper, an dessen beiden Längsstirnseiten je eine als Ganzes montierbare Umlenkbaugruppe vorgesehen ist. Gemäß Fig. 6 und 7 der US 5 193 914 sind in jeder Umlenkbaugruppe 13 insgesamt vier gebogene Umlenkdurchgänge 14; 16; 18; 19 vorgesehen, welche die ersten Wälzflächen mit den zugeordneten Rücklaufdurchgängen verbinden, so dass ein endloser Umlaufweg entsteht. Damit die Umlenkdurchgänge im Wesentlichen absatzfrei zu den Rücklaufdurchsängen ausgerichtet sind, sind an den Umlenkbaugruppen Fortsätze 62 vorgesehen, die in den Rücklaufdurchgang eingreifen. Hierfür ist an dem Rückführrohr 70, in dem der entsprechende Rücklaufdurchgang ausgebildet ist, je eine Ausnehmung vorgesehen, die gemäß Fig. 3 durch die Flächen 39; 40 begrenzt wird.

Der Nachteil der US 5 193 914 besteht darin, dass ein gesondertes Rückführrohr erforderlich ist. Dies hat neben den erhöhten Herstellungskosten den Nachteil, dass vor und hinter der ersten Baugruppe genügend Platz zu dessen Montage vorhanden sein muss. Dieser steht insbesondere bei Linearmodulen, wie sie beispielsweise aus der DE 10 2006 007 067 A1 bekannt sind, nicht immer zur Verfügung. Es ist zwar auch möglich, die für den Ausrichtfortsatz notwendige Ausnehmung mittels eines gesonderten Arbeitsgangs von der Längsstirnseite der ersten Baugruppe her unmittelbar in diese einzuarbeiten, aber auch dies ist unter beengten Platzverhältnissen nicht immer möglich und überdies kostenträchtig.

Aus der DE 199 56 296 A1 ist eine weitere Linearbewegungsvorrichtung bekannt. Gemäß den Fig. 15 und 16 der DE 199 56 296 A1 umfasst die Linearbewegungsvorrichtung eine erste Baugruppe 60 und eine zweite Baugruppe 50, die gegenüber der ersten Baugruppe linearbeweglich ist. Die zweite Baugruppe ist in Form einer sich in eine Längsrichtung erstreckenden Führungsschiene ausgebildet, wobei die erste Baugruppe in Form eines Führungswagens ausgeführt ist, der die Führungsschiene U-förmig umgreift. An der ersten Baugruppe ist eine sich in Längsrichtung erstreckende erste Wälzfläche vorgesehen, der eine zweite Wälzfläche 57 an der zweiten Baugruppe gegenübersteht, wobei zwischen der ersten und der zweiten Wälzfläche eine Reihe von kugelförmigen Wälzkörpern angeordnet ist. Die erste Baugruppe umfasst einen einstückigen Grundkörper 60, an dessen beiden in Längsrichtung weisenden Enden je eine Umlenkbaugruppe 2 vorgesehen ist. Im Grundkörper sind mehrere Rücklaufdurchgänge 5 vollständig und unmittelbar vorgesehen. In der Umlenkbaugruppe sind mehrere gebogene Umlenkdurchgänge 6 vollständig vorgesehen, welche jeweils einen Rücklaufdurchgang mit einer zugeordneten ersten Wälzfläche verbinden, so dass die Wälzkörper endlos umlaufen können.

Gemäß den Fig. 1 und 2 der DE 199 56 296 A1 ist an der Umlenkbaugruppe ein Fortsatz 15 vorgesehen, der in den Rücklaufdurchgang eingreift. Der Fortsatz ist in Form eines Kreisrings ausgeführt, dessen Innenumfangsfläche den endlosen Umlaufweg für die Wälzkörper begrenzt. Die Außenumfangsfläche des Fortsatzes hat damit notwendigerweise einen größeren Durchmesser als Rücklaufdurchgang. Da der Rücklaufdurchgang unmittelbar am Grundkörper vorgesehen ist, muss für den Fortsatz in einem gesonderten Arbeitsgang eine angepasste Ausnehmung 10 im Grundkörper hergestellt werden.

Die Aufgabe der Erfindung besteht darin, eine Linearbewegungsvorrichtung anzugeben, bei der die für den Ausrichtfortsatz notwendige Gegenkontur besonders kostengünstig hergestellt werden kann, insbesondere unter beengten Platzverhältnissen, wie sie in Linearmodulen vorzufinden sind. Darüber hinaus soll der Übergangsbereich zwischen gebogenem Umlenkdurchgang und Rücklaufdurchgang besonders störungsfrei gestaltet werden, so dass die Wälzkörper in der Linearbewegungsvorrichtung besonders geräusch- und verschleißarm laufen.

Gemäß dem selbstständigen Anspruch wird diese Aufgabe dadurch gelöst, dass der Fortsatz der Umlenkbaugruppe fingerartig sich in Längsrichtung erstreckend ausgeführt ist, und wobei der Rücklaufdurchgang eine an den fingerartigen Fortsatz angepasste Nut aufweist, in die der genannte Fortsatz eingreift. Gemäß diesem Vorschlag wird auf ein Rückführrohr verzichtet, wobei der Rücklaufdurchgang unmittelbar im ersten Grundkörper ausgeführt ist. Der Rücklaufdurchgang soll auch vollständig im ersten Grundkörper ausgeführt sein, also allseitig von diesem begrenzt sein, damit die Linearbewegungsvorrichtung wie die Linearbewegungsvorrichtung gemäß der US 5 193 914 wenig Geräusche erzeugt. Die Eingreifkontur für den Ausrichtfortsatz ist in Form einer Nut ausgeführt. Um zu gewährleisten, dass diese Nut die Führung der Wälzkörper im Rücklaufdurchgang möglichst wenig beeinträchtigt, soll erstgenannte möglichst schmal ausgeführt sein. Dementsprechend ist der Ausrichtfortsatz als fingerartiger Fortsatz ausgeführt, seine Länge soll also deutlich größer als seine Breite sein.

Es sind wenigstens zwei fingerartige Fortsätze vorgesehen, die im Wesentlichen gleichmäßig über den Umfang des zugeordneten Rücklaufdurchgangs verteilt angeordnet sind, wobei sie jeweils in eine gesonderte Nut eingreifen. Mit diesem Merkmal wird erreicht, dass die fingerartigen Fortsätze die Umlenkbaugruppe in jeder Querrichtung bezüglich der Längsachse gegenüber dem ersten Grundkörper ausrichten. Um die Montage der Umlenkbaugruppe nicht unnötig zu erschweren, wird die Anzahl der fingerartigen Fortsätze so gering wie möglich gehalten.

Das letztgenannte Merkmal ist besonders vorteilhaft in Verbindung mit der Ausführungsform, bei der an den fingerartigen Fortsätzen bezüglich des Verlaufs des Rücklaufdurchgangs geneigte Führungsflächen vorgesehen sind. Bei der letztgenannten Ausführungsform wird die Kollision zwischen der Längsstirnfläche des ersten Grundkörpers und den fingerartigen Fortsätzen nur im Bereich des fingerartigen Fortsatzes verhindert. Durch die Verwendung von mehreren fingerartigen Fortsätzen kann erreicht werden, dass die entsprechende Kollision über den gesamten Umfang des Rücklaufdurchgangs ausgeschlossen ist. Bei der Verwendung von kugelförmigen Wälzkörpern reichen drei fingerartige Fortsätze aus, um den gewünschten Effekt zu erzielen.

In den abhängigen Ansprüchen sind vorteilhafte Weiterbildungen und Verbesserungen der Erfindung angegeben.

Die angepasste Nut kann sich über die gesamte Länge des Rücklaufdurchgangs erstrecken, wobei der Rücklaufdurchgang vorzugsweise über die gesamte Länge ein im Wesentlichen konstantes Querschnittsprofil aufweist. Hierbei ist insbesondere daran gedacht, den Grundkörper aus Aluminium im Strangpressverfahren herzustellen, so dass auf kostengünstige Weise eine nahezu beliebige Querschnittsform des Rücklaufdurchgangs ausgeführt werden kann. Der Rücklaufdurchgang soll nach dem Strangpressen höchst vorzugsweise keine weitere Bearbeitung mehr erfahren. Durch das Strangpressherstellung besitzt der Rücklaufdurchgang über die gesamte Länge des ersten Grundkörpers ein im Wesentlichen konstantes Querschnittsprofil. Folglich erstrecken sich auch die erfindungsgemäße Nut über die gesamte Länge des Rücklaufdurchgangs. Eine derartige Ausführungsform ist erheblich kostengünstiger als eine Ausführungsform bei der sich die Nuten nur im Endbereich des Rücklaufdurchgangs erstrecken, da die Nuten im letztgenannten Fall in einem gesonderten Arbeitsschritt hergestellt werden müssten, beispielsweise mittels einer Span abhebende Bearbeitung wie Fräsen.

Es können Kugeln als Wälzkörper vorgesehen sein, wobei die Breite der Nuten zwischen 10% und 60% des Kugeldurchmessers beträgt. Diese Breite der Nuten gewährleistet, dass die fingerartigen Fortsätze einerseits eine ausreichende Steifigkeit aufweisen, um ihre Ausrichtfunktion zu erfüllen, wobei andererseits im Rücklaufdurchgang abseits der Nuten noch genügend große Führungsflächen zum Führen der Wälzkörper vorhanden sind.

Der fingerartige Fortsatz kann wenigstens eine Führungsfläche aufweisen, die den Wälzkörpern zugewandt ist, wobei die Führungsfläche an dem der Umlenkbaugruppe abgewandten vorderen Ende des fingerartigen Fortsatzes so weit versenkt in der Nut angeordnet ist, dass sie nicht in Kontakt mit den Wälzkörpern gelangen kann. Der fingerartige Fortsatz erstreckt sich nicht über die gesamte Länge des Rücklaufdurchgangs, so dass er eine vordere Längsstirnfläche aufweist. Mit der vorgeschlagenen Maßnahme soll erreicht werden, dass diese vordere Längsstirnfläche so weit in der Nut versenkt angeordnet ist, dass die vom Rücklaufdurchgang her kommenden in den gebogenen Umlenkdurchgang einlaufenden Wälzkörper nicht mit dieser kollidieren können. Derartige Kollisionen würden den Wälzkörperablauf stören und Geräusche verursachen, die es zu vermeiden gilt.

Die Führungsfläche kann geneigt zum Verlauf des Rücklaufdurchgangs ausgeführt sein, wobei die Führungsfläche am vorderen Ende des fingerartigen Fortsatzes weiter entfernt von der Mittenachse des Rücklaufdurchgangs angeordnet ist als am gegenüberliegenden hinteren Ende des fingerartigen Fortsatzes. Hierbei ist vorzugsweise daran gedacht, dass die Führungsfläche am hinteren Ende des fingerartigen Fortsatzes aus der zugeordneten Nut herausragt, damit die Wälzkörper die Führungsfläche des Rücklaufdurchgangs in diesem Bereich nicht berühren können. Soweit dieser bevorzugte Zustand aus Toleranzgründen nicht erreicht werden kann, so ist wenigstens beabsichtigt, dass die Führungsflächen des Rücklaufdurchgangs nur um einen sehr geringen Betrag über die fingerartigen Fortsätze überstehen. Mit den vorstehenden Maßnahmen soll erreicht werden, dass die von dem gebogenen Umlenkdurchgang her kommenden in den Rücklaufdurchgang einlaufenden Wälzkörper im Bereich des fingerartigen Fortsatzes nicht mit der Längsstirnfläche des ersten Grundkörpers kollidieren können.

Es können kugelförmige Wälzkörper vorgesehen sein, wobei der fingerartige Fortsatz eine U-förmige Querschnittsform mit einer Basis und zwei U-Schenkeln aufweist, an deren Stirnseiten je eine Führungsfläche vorgesehen ist, wobei Länge der U-Schenkel vom vorderen zum hinteren Ende der fingerartigen Fortsätze, vorzugsweise gleichmäßig, zunimmt. Die gegenüber dem Verlauf des Rücklaufdurchgangs geneigten Führungsflächen werden somit durch die Stirnflächen der U-Schenkel gebildet. Da diese sehr schmal sind, berührt die Kugel den Führungsfortsatz im Wesentlichen immer nur an zwei Punkten, so dass diese immer in definierter Weise statisch bestimmt am Führungsfortsatz geführt ist, auch wenn Fertigungsungenauigkeiten des fingerartigen Fortsatzes vorliegen.

Der fingerartige Fortsatz kann wenigstens abschnittsweise am Grund der zugeordneten Nut anliegen. Hierdurch soll eine definierte Lage des fingerartigen Fortsatzes herbeigeführt werden. Diese Ausführungsform ist besonders vorteilhaft in Verbindung mit einer der Ausführungsform, bei der die Führungsfläche an den fingerartigen Fortsätzen eine definierte Lage bezüglich der Nut aufweisen soll.

Alle fingerartigen Fortsätze und die zugeordneten Nuten sind vorzugsweise identisch ausgeführt, damit die Wälzkörper auf allen Seiten gleichmäßig geführt sind. Hierdurch ergibt sich ein besonders störungsfreier und geräuscharmer Lauf der Wälzkörper.

Es kann ein biegeverformbares Rohr vorgesehen sein, das einen flexiblen Durchgang für die Wälzkörper begrenzt, wobei der fingerartige Fortsatz an einem vorderen Ende des biegeverformbaren Rohres vorgesehen ist, wobei das gegenüberliegende hintere Ende des biegeverformbaren Rohres an der Umlenkbaugruppe festgelegt ist, so dass der flexible Durchgang in den zugeordneten Umlenkdurchgang mündet. Wie bereits erwähnt, soll der Rücklaufdurchgang besonders bevorzugt ohne weitere Nachbearbeitung im Strangpressverfahren hergestellt sein. Hierbei ergibt sich das Problem, dass der Rücklaufdurchgang meist mit einem bedeutenden Lagefehler behaftet ist. Kritisch ist in dieser Hinsicht insbesondere die Lage des Rücklaufdurchgangs relativ zur ersten Wälzfläche. Diese muss genau auf den zugeordneten gebogenen Umlenkdurchgang abgestimmt sein, damit an dessen beiden Enden ein absatzfreier Übergang gewährleistet werden kann. Die genannten Lagefehler des Rücklaufdurchgangs machen dies aber unmöglich. Mit dem vorgeschlagenen biegeverformbaren Rohr kann dieser herstellungsbedingte Versatz ausgeglichen werden, ohne dass im Wälzkörperweg irgendwelche Stufen vorhanden sind, die den Wälzkörperablauf stören könnten. Das biegeverformbare Rohr ist am hinteren Ende in der Umlenkbaugruppe festgelegt, wobei es am vorderen Ende mit dem fingerartigen Fortsatz in den Rücklaufdurchgang eingreift. Durch diese Maßnahme wird dem biegeverformbaren Rohr die zur Ausgleich des genannten Versatzes notwendige Biegung aufgezwungen. Hierbei ist vorzugsweise an eine elastische Verbiegung gedacht. Anzumerken ist, dass auch bei dieser Ausführungsform bevorzugt mehrere fingerartige Fortsätze zum Einsatz kommen, damit die genannte Verbiegung in jede beliebige Querrichtung erfolgen kann.

Das biegeverformbare Rohr kann wenigstens ein radiales Fenster aufweisen. Es hat sich gezeigt, dass selbst ein biegeverformbares Rohr aus Kunststoff eine verhältnismäßig hohe Steifigkeit aufweist, so dass die Festigkeit der fingerartigen Fortsätze oft nicht ausreicht, um das biegeverformbare Rohr ausreichend zu verbiegen. Durch das radiale Fenster soll die Biegesteifigkeit des biegeverformbaren Rohres so weit herabgesetzt werden, dass mit den fingerartigen Fortsätzen die notwendige Verbiegung herbeigeführt werden kann. Bei der Festlegung von Größe und Anzahl der Fenster muss beachtet werden, dass die Wälzkörper vom verbleibenden Rohr noch ausreichend geführt werden.

Es können mehrere radiale Fenster verteilt über den Umfang des biegeelastischen Rohres angeordnet sein, so dass die Fenster Stege im biegeelastischen Rohr definieren, wobei die Stege in Verlängerung der fingerartigen Fortsätze angeordnet sind. Hierdurch wird gewährleistet, dass die fingerartigen Fortsätze mit einer genügend hohen Steifigkeit mit den genannten Stegen verbunden sind, um die bereits genannte Verbiegung herbeizuführen, wobei gleichzeitig das gesamte biegeverformbare Rohr eine vergleichsweise geringe Steifigkeit aufweist. Dadurch, dass die Stege in Verlängerung der fingerartigen Fortsätze angeordnet sind, wird überdies gewährleistet, dass die Führungsflächen an den fingerartigen Fortsätzen unterbrechungsfrei auf den Stegen fortgesetzt werden können, so dass keine Störstelle vorhanden ist, die den Ablauf der Wälzkörper behindern könnte.

Der fingerartige Fortsatz und das biegeverformbare Rohr können einstückig in Form eines gesonderten Überführungsteils ausgebildet sein. Dieses Bauteil kann trotz seiner vergleichsweise komplexen Form aus Kunststoff im Spritzgussverfahren hergestellt werden, weil es kaum Hinterschneidungen aufweist, die mit diesem Verfahren nur aufwändig herzustellen sind. Das Überführungsteil ist dementsprechend kostengünstig. Gleichzeitig sind die Abmessungen des Überführungsteils im Wesentlichen nur vom Kugeldurchmesser abhängig, so dass ein und dasselbe Bauteil in vielen unterschiedlich gestalteten Linearbewegungsvorrichtungen zum Einsatz kommen kann, sofern in diesen die gleichen Wälzkörper zum Einsatz kommen. Hierdurch sinken die Herstellkosten noch weiter. Darüber hinaus wird die verbleibende Umlenkbaugruppe durch das gesonderte Umlenkteil so weit vereinfacht, dass auch diese einfach im Kunststoff-Spritzgussverfahren hergestellt werden kann.

Das biegeverformbare Rohr kann in einer konischen Ausnehmung der Umlenkbaugruppe aufgenommen sein. Das biegeverformbare Rohr ist dementsprechend in dem Bereich der konischen Ausnehmung mit dem geringsten Durchmesser an der Umlenkbaugruppe festgelegt. Der verbleibende Bereich der konischen Ausnehmung besitzt demgegenüber einen vergrößerten Durchmesser und stellt somit den notwendigen Raum für die Biegeverformung des biegeverformbaren Rohres bereit und zwar in alle Querrichtungen gleichmäßig. Diese Anordnung ist einerseits sehr platzsparend und andererseits problemlos im Kunststoff-Spritzgussverfahren herstellbar.

Eine dem fingerartigen Fortsatz benachbarte Stirnfläche des biegeverformbaren Rohres kann an dem ersten Grundkörper anliegen. Durch die konische Ausnehmung in Verbindung mit dem ersten Grundkörper wird dementsprechend die Lage des biegeverformbaren Rohres und mithin die Lage des gesamten Überführungsteils in Längsrichtung festgelegt, ohne dass hierfür gesonderte aufwändige Befestigungskonturen an der Umlenkbaugruppe oder am ersten Grundkörper notwendig sind. Die Stirnfläche des Überführungsteils ist hierbei ebenso wie die zugeordnete Stirnfläche des ersten Grundkörpers vorzugsweise eben ausgeführt.

Die Erfindung wird im Folgenden anhand der beigefügten Zeichnungen näher erläutert. Es stellt dar:
- Fig. 1: eine perspektivische Ansicht einer erfindungsgemäßen Linearbewegungsvorrichtung;
- Fig. 2: einen Querschnitt der Linearbewegungsvorrichtung gemäß Fig. 1, wobei die Schnittebene in Fig. 1 mit A-A gekennzeichnet ist;
- Fig. 3: eine perspektivische Ansicht der ersten Baugruppe der Linearbewegungsvorrichtung gemäß Fig. 1;
- Fig. 3a: eine perspektivische Teilansicht einer zweiten Ausführungsform der ersten Baugruppe gemäß Fig. 3;
- Fig. 4: eine perspektivische Ansicht der Antriebsbaugruppe der Linearbewegungsvorrichtung gemäß Fig. 1;
- Fig. 5: eine perspektivische Ansicht der zweiten Baugruppe der Linearbewegungsvorrichtung gemäß Fig. 1;
- Fig. 6: eine perspektivische Ansicht eines Wälzkörperumlaufs ohne die , umgebende erste Baugruppe;
- Fig. 7: eine Explosionsdarstellung der Umlenkbaugruppe des Wälzkörperumlaufs gemäß Fig. 6;
- Fig. 8: eine perspektivische Ansicht des Überführungsteils gemäß Fig. 7;
- Fig. 9: einen Querschnitt eines Rücklaufdurchgangs mit eingesetztem Überführungsteil;
- Fig. 10: eine perspektivische Ansicht einer zweiten Ausführungsform der Umlenkbaugruppe;
- Fig. 11: eine Explosionsdarstellung einer dritten Ausführungsform der Umlenkbaugruppe;

Fig. 1 zeigt eine erfindungsgemäße Linearbewegungsvorrichtung 10 in Form eines Linearmoduls. Die Linearbewegungsvorrichtung umfasst eine erste Baugruppe 30 in Form eines Gehäuses, das sich in einer Längsrichtung 11 erstreckt. Weiter ist eine zweite Baugruppe 60 in Form eines Tischteils vorgesehen, welche längsbeweglich gegenüber der ersten Baugruppe 30 ist. Die zweite Baugruppe 60 umfasst einen zweiten Grundkörper 70, der aus Aluminium besteht, wobei an dessen vorderem Ende 12 eine Befestigungsplatte 82 vorgesehen ist, die sich in jeder Stellung der zweiten Baugruppe vor dem vorderen Ende der ersten Baugruppe 30 befindet. Bei der Befestigungsplatte 82 handelt es sich um eine ebene Platte aus Aluminium, die ebenso wie der zweite Grundkörper 60 mit verschiedenen Befestigungsmitteln 81 in Form von Gewinde- 83 und Durchgangsbohrungen 84 versehen ist, so dass diese an einer (nicht dargestellten) übergeordneten Baugruppe befestigt werden können.

Die erste Baugruppe 30 umfasst einen ersten Grundkörper 40, der ebenfalls aus Aluminium besteht. In dem ersten Grundkörper 40 sind Durchgangsbohrungen 42 als Befestigungsmittel vorgesehen, so dass die erste Baugruppe 30 an einer (nicht dargestellten) untergeordneten Baugruppe befestigt werden kann. Da die Befestigungsmittel 42 der ersten Baugruppe 30 zum Teil durch die zweite Baugruppe 60 verdeckt sind, sind in letztgenannter diverse durchgehende Montagebohrungen 76 vorgesehen, durch die hindurch Schraubbolzen in die Durchgangsbohrungen 42 der ersten Baugruppe 30 eingeführt werden können.

Am hinteren Ende 13 des zweiten Grundkörpers 70 ist eine Abstreifplatte 62 aus Stahlblech mittels Befestigungsschrauben 62a montiert. Die Abstreifplatte 62 steht dem ersten Grundkörper 40 mit geringem Abstand gegenüber, so dass im Wesentlichen keine Fremdkörper zwischen die erste 30 und die zweite Baugruppe 60 gelangen können. Mit der Abstreifplatte 61 wird überdies eine stirnseitige (grobschematisch dargestellte) Magnetausnehmung 77 im zweiten Grundkörper 70 verschlossen, in der ein (grobschematisch dargestellter) Permanentmagnet 63 aufgenommen ist. Das Magnetfeld dieses Permanentmagneten 63 kann durch einen oder mehrere Sensoren 33 erfasst werden, die in einer sich in Längsrichtung 11 erstreckenden, hinterschnittenen Sensomut 41 in jeder beliebigen Längsposition festlegbar sind. Hierdurch kann eine oder mehrere Stellungen der zweiten Baugruppe 60 bezüglich der ersten Baugruppe 30 durch eine (nicht dargestellte) übergeordnete Steuerungsvorrichtung erkannt werden.

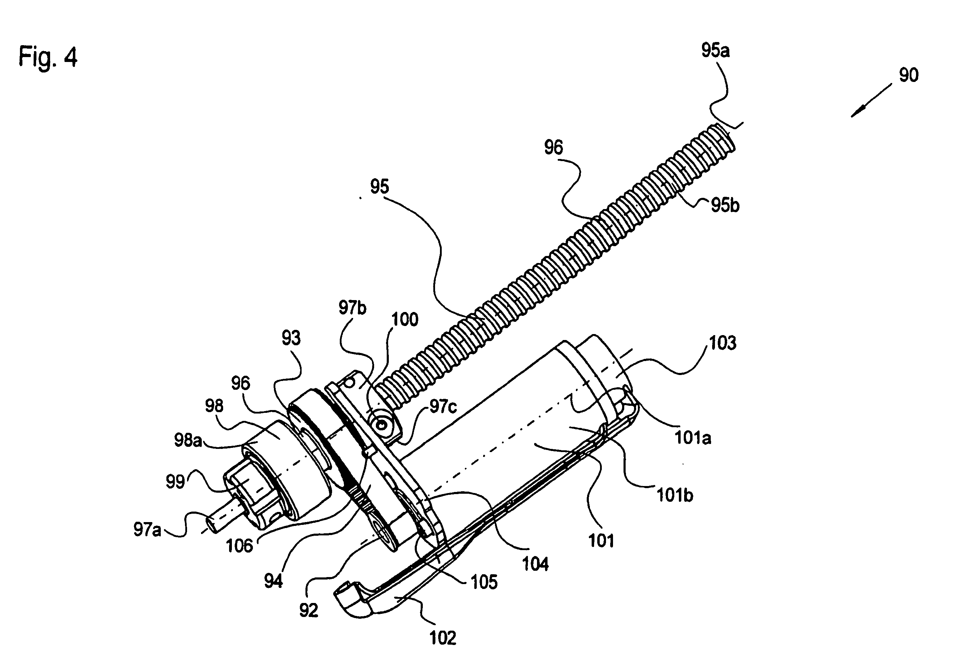

Am hinteren Ende 13 des ersten Grundkörpers 40 ist eine Antriebsbaugruppe 90 vorgesehen, mit der die zweite Baugruppe 60 gegenüber der ersten Baugruppe 30 bewegt werden kann. In Fig. 1 ist jedoch nur das Getriebegehäuse 91 der Antriebsbaugruppe 90 zur erkennen, wobei letztgenannte mit Bezug auf Fig. 4 noch näher erläutert wird.

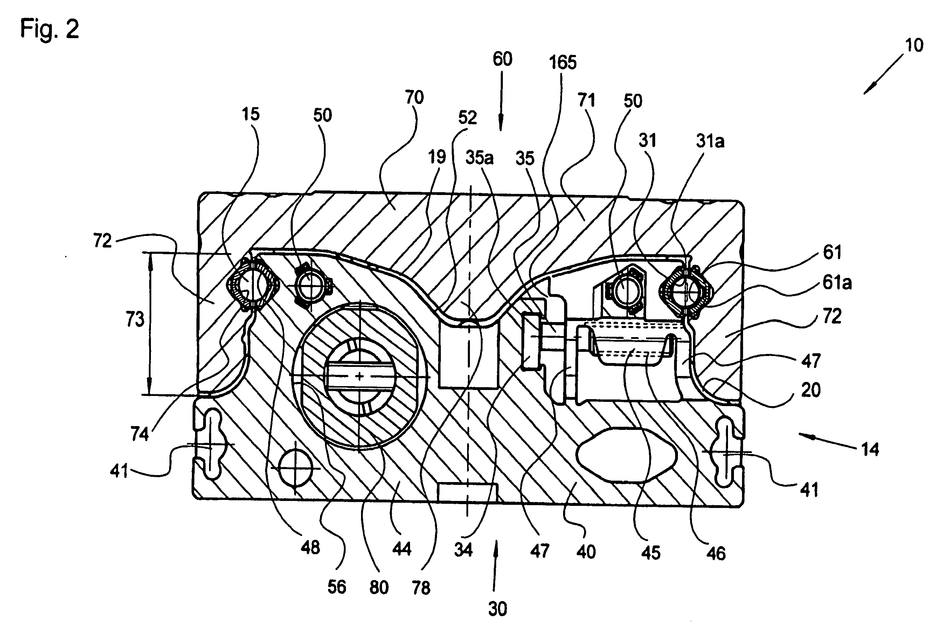

Fig. 2 zeigt einen Querschnitt der Linearbewegungsvorrichtung 10. Zu erkennen ist der insgesamt U-förmige Aufbau des zweiten Grundkörpers 70 mit einer Basis 71 und zwei senkrecht von dieser abstehenden U-Schenkeln 72. An den gegenüberliegenden Innenseiten der U-Schenkel ist je ein zweites Wälzflächenteil 61 vorgesehen. Bei dem zweiten Wälzflächenteil 61 handelt es sich um einen sich in Längsrichtung erstreckenden Profilkörper, der eine konstante im Wesentlichen V-förmige Querschnittsform aufweist. An der Innenseite der V-Form ist das aus gehärtetem Wälzlagerstahl bestehende zweite Wälzflächenteil 61 mit einer zweiten Wälzfläche 61 a versehen, die mit einem spitzbogenförmigen Querschnittsprofil ausgeführt ist, so dass die kugelförmigen Wälzkörper 15 die zweite Wälzfläche 61a in bekannter Weise an zwei Punkten berühren. Dem zweiten Wälzflächenteil 61 steht ein erstes Wälzflächenteil 31 gegenüber, das bis auf die Länge identisch mit dem zweiten Wälzflächenteil 61 ausgeführt ist. Die Wälzkörper 15 können dementsprechend zwischen den ersten und den zweiten Wälzflächen 31a; 6 1 a abwälzen, so dass die zweite Baugruppe 60 an der ersten Baugruppe 30 längsbeweglich abgestützt ist. Der erste 40 und der zweite Grundkörper 70 sind jeweils aus einem Rohteil gefertigt, das aus Aluminium im Strangpressverfahren hergestellt ist, wobei das beim Strangpressen hergestellte Querschnittsprofil in weiten Teilen dem in Fig. 2 zu erkennenden Querschnittsprofil entspricht. Auf die Geometrien, die nach dem Strangpressen noch Span abhebend bearbeitet werden, wird im Folgenden entsprechend hingewiesen. Hierbei sind an erster Stelle die Aufnahmausnehmungen 48; 74 zu nennen, in denen die ersten 31 und die zweiten Wälzflächenteile 61 formschlüssig aufgenommen sind. Erstgenannte 48; 74 müssen genau an die zugeordneten Wälzflächenteile 31; 61 angepasst sein und eine hohe Geradheit aufweisen, damit die Wälzführung steif und genau arbeitet. Sie wurden deshalb mittels einer Fräsbearbeitung am entsprechenden Rohteil angebracht.

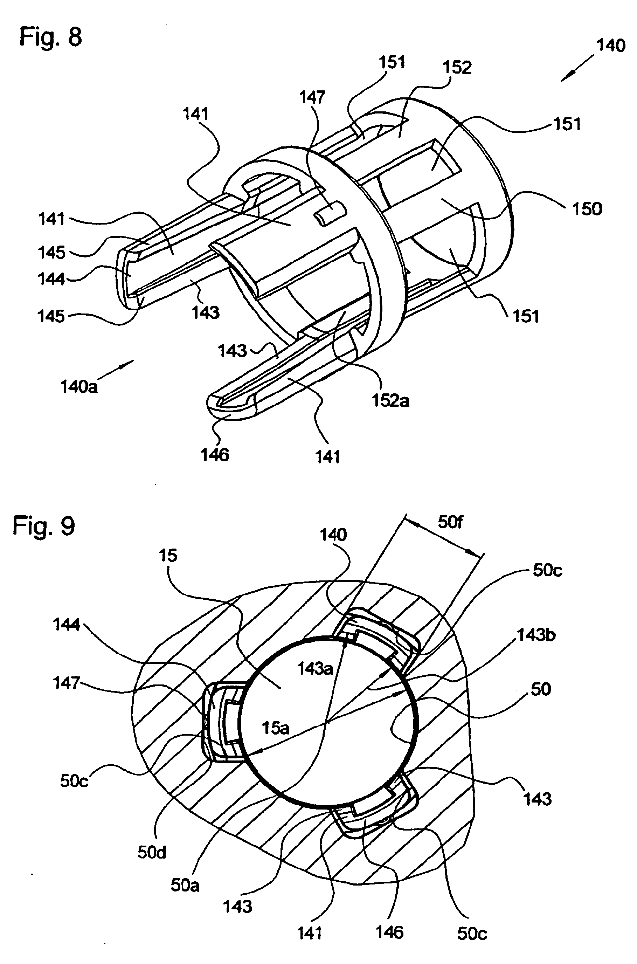

Jeder ersten Wälzfläche 31 ist ein Rücklaufdurchgang 50 zugeordnet, der ohne weitere Nachbearbeitung beim Strangpressen hergestellt wird. Der Rückführkanal 50, dessen Querschnittsform mit Bezug auf Fig. 9 noch näher beschrieben wird, ist an beiden Enden über je einen gebogenen Umlenkdurchgang (Nr. 125; Fig. 7) mit der zugeordneten ersten Wälzfläche 31 a verbunden, so dass die Wälzkörper 15 endlos umlaufen können.

Das in Fig. 2 rechte erste Wälzflächenteil 31 ist an einem Verstellabschnitt 45 des ersten Grundkörpers 40 aufgenommen, der gegenüber dem Basisabschnitt 44 des ersten Grundkörpers 40, an dem die Befestigungsmittel (Nr. 42 ; Fig. 1) für die untergeordnete Baugruppe vorgesehen sind, lageverstellbar ist, so dass die Vorspannung der Wälzführung einstellbar ist. Der Verstellabschnitt 45 ist zu diesem Zweck über zwei sich in Längsrichtung erstreckende biegeelastische Stege 47 mit dem Basisabschnitt 44 einstückig verbunden. Der Verstellabschnitt 45 ist mit einem Verstellmittel in Form eines Schraubbolzens 35 versehen, der in ein (grobschematisch dargestelltes) Gewinde 46 des Verstellabschnitts 45 eingeschraubt ist. Da der Schraubbolzen 35 durch die zweite Baugruppe 60 verdeckt ist, ist in letztgenannter ein Durchbruch (Nr. 43; Fig. 1) vorgesehen, so dass er mit einem Schraubwerkzeug, beispielsweise einem Innensechskantschlüssel, verstellt werden kann. Die Stirnfläche 35a des Schraubbolzens stützt sich über eine gesonderte rechteckige Stahlleiste 34 am Basisabschnitt 44 ab. Die Stahlleiste 34 ist notwendig, damit der Schraubbolzen 35 das weiche Aluminium des ersten Grundkörpers 40 nicht plastisch verformt, was ein unerwünschtes Nachlassen der Vorspannkraft auf die Wälzkörper 15 zur Folge hätte. Die genannten biegeelastischen Stege 47 sind jeweils parallel zu den U-Schenkeln 72 der zweiten Baugruppe 60 angeordnet, wobei die Schraubachse des Schraubbolzens 35 senkrecht zu diesen ausgerichtet ist, so dass eine zur Vorspannungseinstellung geeignete Verstellrichtung gegeben ist.

Weiter ist darauf hinzuweisen, dass der erste Grundkörper 40 dem zweiten Grundkörper 70 mit einem geringen Abstand äquidistant gegenüber steht, so dass zwischen diesen ein enger Dichtspalt 19 vorhanden ist der verhindert, dass Fremdkörper zwischen diese Teile gelangen können. Insbesondere soll verhindert werden, dass Fremdkörper zu den Wälzkörpern 15 gelangen können, da dies zu Beschädigungen führen kann, wenn die Fremdkörper zwischen die Wälzkörper 15 und die zugeordneten Wälzflächen 31 a; 61 a geraten. Um das Eindringen von Fremdkörpern weiter zu erschweren ist der Dichtspalt 19 ausgehend von der Außenoberfläche 14 der Linearbewegungsvorrichtung 10 mit einem Richtungswechsel 20 versehen. An dieser Stelle sei auch auf die Versteifungsrippe 78 am zweiten Grundkörper 70 hingewiesen, die dessen Biegesteifigkeit erhöhen soll. Die Versteifungsrippe 78 greift in eine Rippenausnehmung 52 am ersten Grundkörper 40 ein, so dass auch in diesem Bereich der genannte enge Dichtspalt 19 vorliegt.

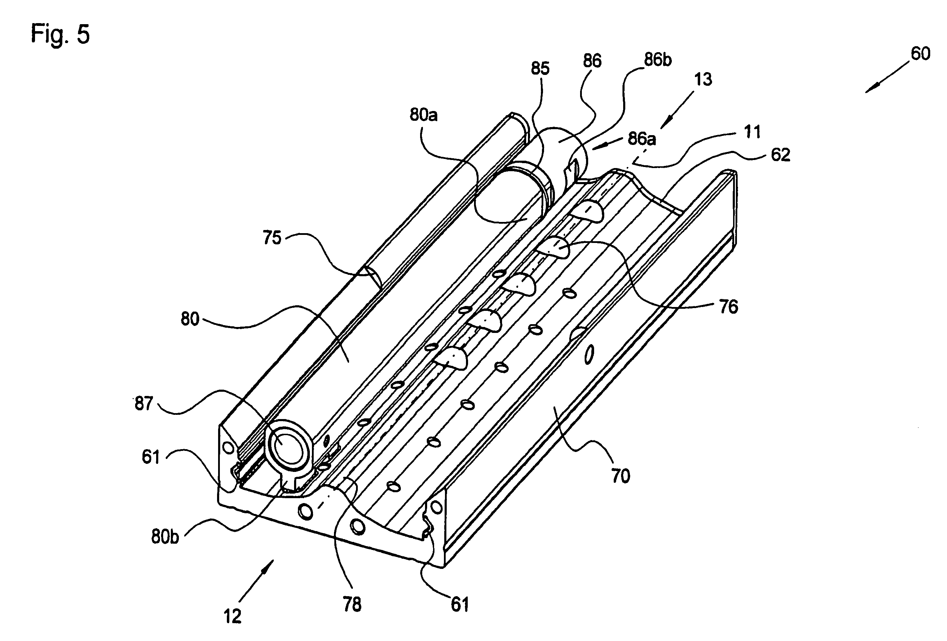

In Fig. 2 ist außerdem die T-förmige Querschnittsform der hinterschnittenen Sensomut 41 zu erkennen. Weiter ist auf das Schubrohr 80 hinzuweisen, das mit Bezug auf Fig. 5 noch näher beschrieben wird. Das Schubrohr 80 ist mit einem geringen Abstand in einer Mutterausnehmung 56 des ersten Grundkörpers 40 aufgenommen.

Fig. 3 zeigt die erste Baugruppe 30. Der erste Grundkörper 40 der ersten Baugruppe 30 ist in einen ersten 40a und einen zweiten Längsabschnitt 40b aufgeteilt, die unmittelbar aneinander grenzen. Im zweiten Längsabschnitt 40b, der sich am vorderen Ende 12 der ersten Baugruppe 30 befindet, sind die bereits beschriebenen endlos umlaufenden Wälzkörper 15 vorgesehen. In Fig. 3 sind insbesondere die vier Umlaufbaugruppen 120 zu erkennen, die jeweils einen einzigen gebogenen Umlenkdurchgang (Nr. 125; Fig. 7) aufweisen, der die zugeordnete erste Wälzfläche (Nr. 31a; Fig. 2) mit dem zugeordneten Rücklaufdurchgang (Nr. 50; Fig. 2) verbindet. Die identisch ausgeführten Umlenkbaugruppen 120 sind so gestaltet, dass sie von einer einzigen Montageseite 32 her montiert werden können, wobei die entsprechenden Befestigungskonturen 53 im ersten Grundkörper 40 ebenfalls ausschließlich von der Montageseite 32 her gefertigt werden können. Die Montageseite 32 ist die in Fig. 3 obere Seite der ersten Baugruppe 30. Als Befestigungskontur ist im ersten Grundkörper 40 für jede Umlenkbaugruppe je eine Umlenkausnehmung 53 vorgesehen, die mittels eines Schaftfräsers hergestellt ist. An dieser Stelle ist anzumerken, dass sich der Rücklaufdurchgang (Nr. 50; Fig. 2) über die gesamte Länge des stranggepressten Rohteils erstreckt, wobei in Fig. 2 noch die Reste 50b des Rücklaufdurchgangs zu erkennen sind, die im ersten Längsabschnitt 40a des ersten Grundkörpers 40 keine Funktion mehr haben. Die vier Umlenkbaugruppen 120 sind jeweils mit einem einzigen Schraubbolzen 131 am ersten Grundkörper 40 befestigt, wobei der Schraubbolzen 131 ebenfalls von der genannten Montageseite 32 her eingeschraubt werden kann und wobei auch die zugeordnete Gewindebohrung von der Montageseite 32 her eingeschnitten werden kann. Diese Ausgestaltung der Wälzkörperrückführung ermöglicht es, dass eine Bauform der Umlenkbaugruppe 120 in vielen unterschiedlichen Bauformen von Linearbewegungsvorrichtungen 10 eingesetzt werden kann.

Der bereits beschriebene Verstellabschnitt 45 des ersten Grundkörpers 40 ist in Fig. 3 auf der rechten Seite angeordnet. Zu erkennen ist insbesondere, dass drei Schraubbolzen 35 vorgesehen sind, mit denen die Einstellung der Wälzkörpervorspannung vorgenominen werden kann. Mit dem Querschlitz 54 und dem Längsschlitz (Nr. 165; Fig. 2) wird der Verstellabschnitt 45 von dem Basisabschnitt 44 des ersten Grundkörpers 40 getrennt, so dass seine Verstellbewegung nicht verhindert wird.

An der Vorderseite 12 der ersten Baugruppe 30 ist eine gesonderte Verschlussplatte 36 vorgesehen, die aus Stahlblech hergestellt ist. Die Verschlussplatte 36 ist mit geringem Abstand äquidistant zum zweiten Grundkörper (Nr. 70; Fig. 2) ausgeführt. Hinzuweisen ist auf den Anschlagabschnitt 36b der Verschlussplatte 36, der etwas über den ersten Grundkörper 40 übersteht, so dass er als Endanschlag für die zweite Baugruppe wirken kann. Am zweiten Grundkörper ist zu diesem Zweck eine Anschlagfläche (Nr. 79; Fig. 5) vorgesehen, die sich quer zur Längsrichtung erstreckt, so dass sie mit dem Anschlagabschnitt 36b zur Anlage kommen kann. Die Anschlagfläche wird hergestellt, indem die U-Schenkel des Rohteils des ersten Grundkörpers an ihrer Stirnseite entsprechend abgefräst werden. Weiter ist auf den Abstreifvorsprung 36a hinzuweisen, der an die zweite Wälzfläche (Nr. 61a; Fig. 2) der zweiten Baugruppe 60 mit sehr geringem Abstand angepasst ist. Mit diesem sollen Fremdkörper wie Metallspäne von der zweiten Wälzfläche entfernt werden, so dass diese nicht in den Wälzkörperumlauf geraten und dort Schäden verursachen können.

Im ersten Längsabschnitt 40a des ersten Grundkörpers 40 ist eine Motorausnehmung 55 zur Aufnahme des Elektromotors (Nr. 101; Fig. 4) der Antriebsbaugruppe vorgesehen. Die Motorausnehmung 55 ist vollständig mittels einer Fräsbearbeitung hergestellt, da sich im Rohteil des ersten Grundkörpers 40 an dieser Stelle die biegeelastischen Stege (Nr. 47; Fig. 2) des Verstellmechanismus zur Vorspannungseinstellung der Wälzführung befinden. Die Außenoberfläche des ersten Grundkörpers 40 ist im ersten Längsabschnitt 40a ausgehend vom Strangpressrohteil nicht mehr bearbeitet. Diese Kontur musste dementsprechend im zweiten Längsabschnitt 40b weggefräst werden, um die Aufnahmeausnehmung (Nr. 48; Fig. 2) des ersten Wälzflächenteils bereit zu stellen.

Neben der Motorausnehmung 55 ist eine Mutterausnehmung 56 vorgesehen, die sich über die gesamte Länge der ersten Baugruppe 30 erstreckt, wobei die Mutterausnehmung 56 zusammen mit der Motorausnehmung 55 einen Antriebsholraum zur Aufnahme der Antriebsbaugruppe (Nr. 90; Fig. 4) bildet. Die Mutterausnehmung 56 dient zur Aufnahme der Gewindespindel (Nr. 95; Fig. 4) der Antriebsbaugruppe und zur Aufnahme des zugeordneten Schubrohres (Nr. 80; Fig. 5) der zweiten Baugruppe. Sowohl die Mutter- 56 als auch die Motorausnehmung 55 sind zumindest abschnittsweise im Höhenbereich (Nr. 73; Fig. 2) der U-Schenkel des zweiten Grundkörpers angeordnet, so dass die Linearbewegungsvorrichtung eine besonders geringe Bauhöhe aufweist.

Die Motorausnehmung 55 ist über eine Luftaustauschausnehmung 57 mit der Mutterausnehmung 56 verbunden, wobei alle genannten Ausnehmungen durch die Antriebsbaugruppe (Nr. 90; Fig. 1) luftdicht abgedeckt werden. Dementsprechend strömt die durch beim Einfahren der zweiten Baugruppe aufgrund der Bewegung der Mutter und des Schubrohres (Nr. 80; Fig. 5) in der Mutterausnehmung 56 verdrängte Luft über die Luftaustauschausnehmung 57 in die Motorausnehmung 55, dort am Elektromotor (Nr. 101; Fig. 4) vorbei und über den Querschlitz 54 ins Freie. Beim Ausfahren der zweiten Baugruppe stellt sich die umgekehrte Strömungsrichtung ein. Durch das Vorbeiströmen der Luft am Elektromotor wird dieser gekühlt, so dass ein besonders kleiner Elektromotor mit einer hohen Leistungsdichte zum Einsatz kommen kann.

Fig. 3a zeigt eine zweite Ausführungsform 30a der ersten Baugruppe. Diese unterscheidet sich von der ersten Ausführungsform 30 gemäß Fig. 3 nur dadurch, dass das verstellbare erste Wälzflächenteil 31 in einem mittleren Längsabschnitt 31c nicht am ersten Grundkörper 40 abgestützt ist. Diese Maßnahme wurde vorgenommen, um einen Wälzkörperstau durch die verhältnismäßig langen ersten Wälzflächen zu verhindern. Die hohe Länge der ersten Wälzflächen wurde gewählt, damit die erste Baugruppe 30a hohe Drehmomentbelastungen steif abstützen kann.

Der genannte mittlere Längsabschnitt 31c wird dadurch gebildet, dass der Grundkörper 40 in diesem Bereich nahezu vollständig weggefräst wurde, so dass ein erster 45a und ein zweiter Verstellabschnitt 45b des ersten Grundkörpers 40 gebildet wird, die mit Abstand zueinander angeordnet sind. In dem mittleren Längsabschnitt 31c befindet sich somit hinter dem ersten Wälzflächenteil überhaupt kein Material mehr, das dieses abstützen könnte; zwischen dem ersten Wälzflächenteil 31 und dem ersten Grundkörper 40 ist im mittleren Längsabschnitt 31 c also ein Abstand 31 d vorhanden. Da das erste Wälzflächenteil 31 nur eine vergleichsweise geringe Steifigkeit aufweist, erfahren die dort ablaufenden Wälzkörper 15 nur eine sehr geringe Last, so dass sie bei Auftreten eines Wälzkörperstaues auch gleitend verschoben werden können, was den Wälzkörperstau sofort wieder auflöst.

Der erste 45a und der zweite Verstellabschnitt 45b sind nur noch über das Rückführrohr 51, in dem der Rücklaufdurchgang (Nr. 50; Fig. 2) angeordnet ist, einstückig miteinander verbunden. Da das Rückführrohr 51 nur eine sehr geringe Wandstärke aufweist, besitzt es eine relative Steifigkeit, so dass der erste 45a und der zweite Verstellabschnitt 45b weitgehend unabhängig voneinander verstellt werden können, um die Vorspannung der Wälzführung einzustellen. Es hat sich als günstig erwiesen, wenn der erste 45a und der zweite Verstellabschnitt 45b nur mit jeweils einem einzigen Verstellmittel in Form eines Schraubbolzens versehen werden, da sich so die Vorspannungseinstellung am schnellsten durchführen lässt.

Im Übrigen ist die zweite Ausführungsform 30a der ersten Baugruppe identisch mit der ersten Ausführungsform 30 ausgeführt. Dies trifft beispielsweise auf die Trennausfräsung 58a zu, mit der ein Trennspalt 58 zwischen dem Verstellabschnitt 45; 45a; 45b und dem Basisabschnitt 44 des ersten Grundkörpers 40 gebildet wird, so dass die gewünschte Verstellbarkeit des Verstellabschnitts gewährleistet ist. Weiter sind in Fig. 3a die Befestigungsschrauben 37 zu erkennen, mit denen die Verschlussplatte 36 am ersten Grundkörper 40 befestigt ist. Zuletzt ist noch auf die Senkbohrungen 42 hinzuweisen, mittels derer die erste Baugruppe 30; 30a an einer übergeordneten Baugruppe befestigt werden kann.

Fig. 4 zeigt die Antriebsbaugruppe 90, die als Ganzes am hinteren Längsende des ersten Grundkörpers befestigt werden kann, wobei das Getriebegehäuse (Nr. 91; Fig. 1) der Übersichtlichkeit halber weggelassen wurde. Die Antriebsbaugruppe 90 umfasst den Elektromotor 101 und die Gewindespindel 95, deren Drehachsen 95a; 101a parallel zueinander ausgerichtet sind. Die Drehantriebsverbindung zwischen dem Elektromotor 101 und der Gewindespindel 95 erfolgt mittels eines endlosen Zahnriemens 94, wobei das kleinere erste Zahnriemenrad 92 am Elektromotor 101 und das größere zweite Zahnriemenrad 93 an der Gewindespindel 95 vorgesehen ist. Der Elektromotor 101 ist mit den Befestigungsschrauben 105 an einer Motorplatte 104 befestigt. Diese wiederum ist in verschiedenen Querpositionen an dem Getriebegehäuse (Nr. 91; Fig. 1) befestigbar, so dass durch eine Verschiebung des Elektromotors 101 die im Betrieb erforderliche Spannung des Zahnriemens eingestellt werden kann. Die entsprechende Position der Motorplatte 104 wird mit dem Zylinderstift 106 gesichert, der formschlüssig in das Getriebegehäuse (Nr. 91; Fig. 1) eingreift. Der Elektromotor 101 ist mit einem Drehgeber 103 ausgestattet, dessen Signal über die elektrische Leitung 102 an eine (nicht dargestellte) übergeordnete Steuerung weitergegeben wird. Über diese elektrische Leitung 102 wird der Elektromotor 101 von der übergeordneten Steuerung auch mit elektrischem Strom versorgt. Weiter ist der Elektromotor 101 mit einem eigenen Motorgehäuse 101b ausgestattet, so dass die oben beschriebene Kühlluft zwischen dem Motorgehäuse 101 b und der Motorausnehmung (Nr. 55; Fig. 3) strömt. Hierdurch wird verhindert, dass mit der Kühlluft angesaugte Fremdkörper in das Innere des Elektromotors 101 gelangen können.

Die Gewindespindel 95 umfasst ein Lagerteil 97 und ein Gewindeteil 96. Bei dem Gewindeteil 96 handelt es sich um einen Abschnitt einer im Gewinderollverfahren hergestellten Kugelgewindespindel, die dementsprechend über seine gesamte Länge mit einem oder mehreren Gewindegängen 95b versehen ist. Beim Gewinderollen werden typischerweise Gewindespindeln mit einer Länge von mehreren Metern hergestellt. Diese werden zur Bildung des Gewindeteils 96 ohne weitere Nachbearbeitung nur auf die gewünschte Länge angeschnitten.

Die Verbindung des Lagerteils 97 mit dem Gewindeteil 96 erfolgt über einen Klemmabschnitt 97b am Lagerteil 97, der direkt auf die Gewindegänge 95b des Gewindeteils 96 einwirkt. Die Gewindegänge 96b wurden aus Kostengründen im Klemmbereich nicht entfernt, da sich auch ohne diese Maßnahme eine genügend starke Klemmkraft erreichen lässt. Der Klemmabschnitt 97b des Lagerteils 97 umfasst zwei Klemmbacken, die durch einen Schlitz 97c voneinander getrennt sind, wobei der Schlitz 97c von einer Klemmschraube 100 durchsetzt ist, um die gewünschte Klemmkraft zu erzeugen.

Das zweite Zahnriemenrad 93 ist als gesondertes Bauteil aus Aluminium ausgeführt und drehfest mit dem Lagerteil 97 aus Stahl verbunden. Weiter ist auf dem Lagerteil 97 ein Radialrillenkugellager 98 vorgesehen, das mittels der Nutmutter 99 an seinem Innenring am Lagerteil 97 festgeklemmt ist. Der Außenring 98a des Radialwälzlagers 98 ist im Getriebegehäuse (Nr. 91; Fig. 1) festgelegt. Die Gewindespindel 95 ist nur mit einer einzigen Drehlagerung ausgestattet. Dementsprechend ist das vorliegende Radialwälzlager zweireihig ausgeführt, damit es die notwendige Belastbarkeit aufweist. Der am Lagerteil 97 verbleibende Zapfen 97a kann beispielsweise zur Anbringung einer Bremse genutzt werden, mit der die Gewindespindel 95 still gesetzt werden kann.

Fig. 5 zeigt die zweite Baugruppe 60 in Form des Tischteils, wobei die Befestigungsplatte (Nr. 82; Fig. 1), die an der vorderen Längsstirnseite 12 des zweiten Grundkörpers 70 angeordnet ist, der Übersichtlichkeit halber weggelassen wurde. Die zweite Baugruppe 60 umfasst den zweiten Grundkörper 70, der sich mit einem U-förmigen Querschnitt in Längsrichtung 11 erstreckt. Weiter umfasst die zweite Baugruppe 60 ein vom zweiten Grundkörper 70 gesondert ausgeführtes Schubrohr 80, das einstückig mit einem Verbindungssteg 80b versehen ist, über den es mit dem zweiten Grundkörper 70 verschraubt ist. In der hintersten Stellung der zweiten Baugruppe 60 greift der Verbindungssteg 80b, der am vorderen Längsende des Schubrohres 80 vorgesehen ist, in die Stegausnehmung (Nr. 59; Fig. 3a) der ersten Baugruppe ein, wobei das Schubrohr 80 gleichzeitig deren Schubrohröffnung (Nr. 36c; Fig. 3a) durchsetzt. Das Schubrohr 80 besteht aus Aluminium und ist im Strangpressverfahren hergestellt, wobei die vordere stirnseitige Öffnung des Schubrohres 80 mit einem gesonderten Verschlussstopfen 87 aus Kunststoff verschlossen ist.

Am hinteren Längsende 13 des Schubrohres ist eine Gewindemutter 86 in Form einer Kugelumlaufmutter angebracht, die in Schraubeingriff mit der Gewindespindel (Nr. 95; Fig. 4) der Antriebsbaugruppe steht. Die Gewindemutter 86 ist in der Bauform einer Einschraubmutter ausgeführt, d. h. sie ist am vorderen Ende mit einem Innengewinde versehen, das in ein entsprechendes Außengewinde art Schubrohr 80 aufgeschraubt ist. Um hierbei ein genügend großes Anzugsmoment der Schraubverbindung zu gewährleisten sind die Gewindemutter 86 und das Schubrohr 80 jeweils mit einem Paar gegenüberliegender Schlüsselflächen 86b; 80a versehen.

Weiter ist am hinteren Ende 13 des Schubrohres 80 eine Spaltdichtung 85 vorgesehen, die in einer umlaufenden Nut des Schubrohres 80 aufgenommen ist. Die Spaltdichtung 85 ist in Umfangsrichtung einmal unterbrochen, so dass sie problemlos auf dem Schubrohr 80 montiert werden kann. Mit der Spaltdichtung 85 soll die Mutterausnehmung (Nr. 56; Fig. 3) an dieser Stelle im Wesentlichen luftdicht abgedichtet werden, um den bereits beschriebenen Kühlluftstrom zu erzeugen. Die Spaltdichtung 85 liegt daher im Wesentlichen dicht an der Mutterausnehmung an.

Die Gewindemutter 86 ist nur auf der vom Schubrohr abgewandten Seite mit einer bekannten Enddichtung 86a versehen, die an der Gewindespindel (Nr. 95; Fig. 4) anliegt. Am gegenüberliegenden Ende ist die Gewindemutter 86 offen, so dass eine Verbindung zum Innenraum des Schubrohres 80 besteht, das mit Schmierfett gefüllt ist. Auf diese Weise ist die Schmierung der Gewindemutter 86 für deren gesamte Lebensdauer sichergestellt.

In Fig. 5 ist weiter zu erkennen, dass sich die Versteifungsrippe 78 ebenso wie die zweiten Wälzflächenteile 61 über die gesamte Länge der zweiten Baugruppe 60 erstrecken. Eine Längsverschiebung der zweiten Wälzflächenteile 61 in der zugeordneten Aufnahmausnehmung (Nr. 74; Fig. 2) wird hierbei durch die Abstreifplatte 62 und die Befestigungsplatte (Nr. 82; Fig. 1) unterbunden.

Fig. 6 zeigt einen Wälzkörperumlauf 16, wobei die umgebende erste Baugruppe der Übersichtlichkeit wegen weggelassen wurde. Der Wälzkörperumlauf 16 umfasst eine Reihe von kugelförmigen Wälzkörpern 15, die in Form einer endlosen Schleife angeordnet ist. Die in Fig. 6 vorderen, tragenden Wälzkörper 17 wälzen auf dem ersten Wälzflächenteil 31 ab, welches mit beiden Enden in je eine Umlenkbaugruppe 120 eingreift, in der jeweils nur ein einziger gebogener Umlenkdurchgang (Nr. 125; Fig. 7) vorgesehen ist. Hierfür ist es notwenig, dass jedes erste Wälzflächenteil 61 in Längsrichtung an beiden Enden über den ersten Grundkörper (Nr. 40; Fig. 3) übersteht. Die in Fig. 6 hinteren, rücklaufenden Wälzkörper 18 laufen in dem Rücklaufdurchgang (Nr. 50; Fig. 2), der unmittelbar im ersten Grundkörper der ersten Baugruppe vorgesehen ist. Um eine bestmögliche Ausrichtung zwischen einer Umlenkbaugruppe 120 und dem zugeordneten Rücklaufdurchgang zu erzielen, sind erstgenannte mit fingerartigen Fortsätzen 141 versehen, die in den Rücklaufdurchgang eingreifen.

Fig. 7 zeigt eine Explosionsdarstellung der Umlenkbaugruppe 120. Die Umlenkbaugruppe 120 besteht aus einem ersten 121 und einem zweiten Umlenkteil 122 aus Kunststoff, die weitgehend spiegelsymmetrisch bezüglich der Teilungsebene 123 ausgeführt sind. Die beiden Umlenkteile 121; 122 begrenzen gemeinsam den gebogenen Umlenkdurchgang 125, der die erste Wälzfläche (Nr. 31 a; Fig. 2) mit dem Rücklaufdurchgang (Nr. 50; Fig. 2) verbindet. Der gebogene Umlenkdurchgang 125 besitzt eine kreisförmige Querschnittsform die so bemessen ist, dass die kugelförmigen Wälzkörper ihn mit geringem Spiel durchlaufen können.

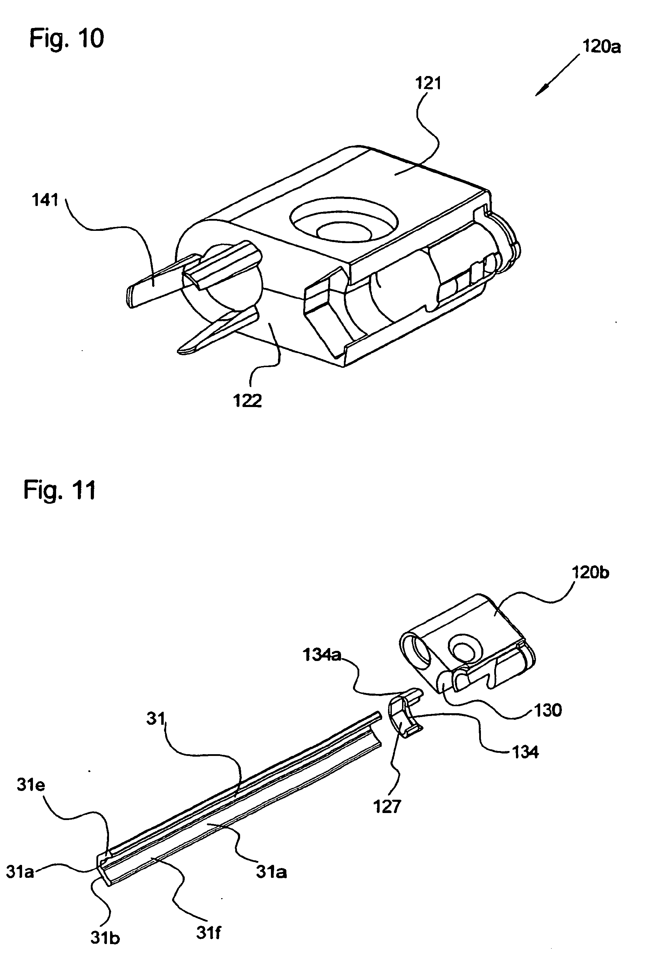

An dem der ersten Wälzfläche zugeordneten Ende des gebogenen Umlenkdurchgangs 125 ist eine Abhebenase 128 vorgesehen, mit der die Wälzkörper von der ersten Wälzfläche abgehoben und in den gebogenen Umlenkdurchgang überführt werden. Die an sich bekannte Abhebenase 128 ist ausschließlich am ersten Umlenkteil 121 ausgebildet, so dass sie mit besonders geringem Abstand zur ersten Wälzfläche angeordnet werden kann. Die Lage der Umlenkbaugruppe 120 gegenüber der ersten Wälzfläche wird mit der Ausrichtausnehmung 127, in die das entsprechende erste Wälzflächenteil eingreift, definiert. Am ersten und am zweiten Umlenkteil 121; 122 ist je eine Hälfte der Ausrichtausnehmung 127 vorgesehen, die jeweils einem V-Schenkel (Nr. 31 e; 31 f in Fig. 11) des ersten Wälzflächenteils zugeordnet ist.

An dem dem Rücklaufdurchgang zugeordneten Ende des gebogenen Umlenkdurchgangs ist ein gesondertes Überführungsteil 140 aus Kunststoff vorgesehen, das mit Bezug auf Fig. 8 und 9 noch näher erläutert wird. Das Überführungsteil 140 ist in einer konischen Ausnehmung 126 aufgenommen, deren kleinster Durchmesser 126a an den zugeordneten Abschnitt des Überführungsstücks 140 im Wesentlichen spielfrei angepasst ist. Aufgrund der konischen Form der genannten Ausnehmung 126 steht dem biegeverformbaren Rohr 150 des Überführungsteils 140 in Querrichtung etwas Freiraum zur Verfügung, so dass es sich entsprechend verbiegen kann, um einen Versatz zwischen dem gebogenen Umlenkdurchgang 125 und dem Rücklaufdurchgang auszugleichen. Hierfür greift es mit drei fingerartigen Fortsätzen 141 in angepasste Nuten (Nr. 50c; Fig. 9) des Rücklaufdurchgangs ein. Das Überführungsteil 140 liegt mit der Stirnfläche 150a des biegsamen Rohres 150 an einer zugeordneten Stirnfläche (Nr. 53a; Fig. 3) des ersten Grundkörpers an, so dass es im Wesentlichen spielfrei in der konischen Ausnehmung 126 gehalten ist.

Im Krümmungsmittelpunkt 125a des gebogenen Umlenkdurchgangs ist im ersten und im zweiten Umlenkteil 121; 122 jeweils ein Durchbruch 124 vorgesehen, der von einem Befestigungsbolzen 131 in Form eines Schraubbolzens durchsetzt wird. Hiermit werden einerseits die beiden Umlenkteile 121; 122 fest miteinander verbunden und andererseits die gesamte Umlenkbaugruppe 120 am ersten Grundkörper befestigt. Anstatt des Schraubbolzens 131 kann beispielsweise auch ein Blindniet oder ein ähnlicher Befestigungsbolzen zum Einsatz kommen, der ausschließlich von einer Seite, nämlich der Montageseite (Nr. 32; Fig. 3) her montiert werden kann.

Weiter ist in der Umlenkbaugruppe 120 ein Schmiersystem vorgesehen, das von einem ersten 132 und einem zweiten Schmierölspeicherkörper 133, der aus einem offenzelligen Schaumstoff besteht, gebildet wird. Beide Schmierölspeicherkörper 132; 133 sind jeweils mittels Wasserstrahlschneiden aus einem Plattenmaterial ausgeschnitten, so dass sie die Form eines Profilkörpers mit einem im Wesentlichen konstanten Querschnitt 132a; 132b aufweisen. Der erste Schmierölspeicherkörper 132 ist derjenige mit dem größeren Volumen, weshalb dieser den Hauptteil des Speichervolumens für das Schmieröl bereit stellt. An dem ersten Schmierölspeicherkörper 132 ist einstückig ein Auftragabschnitt 132b vorgesehen, der in den gebogenen Umlenkdurchgang 125 hinein ragt, so dass die dort entlanglaufenden Wälzkörper an diesem entlang streifen, wodurch Schmieröl aus dem ersten Schmierölspeicherkörper 132 auf die Wälzkörper übertragen wird.

Der zweite Schmierölspeicherkörper 133 gleitet unmittelbar auf der ersten Wälzfläche entlang, so dass diese geschmiert und von kleinen Schmutzpartikeln befreit wird. Die Außenkontur des Abstreifabschnitts 133c des zweiten Schmierölspeicherkörpers 133 ist dementsprechend genau an das Querschnittsprofil der ersten Wälzfläche angepasst. Die Querschnittsebenen 132a; 133a des ersten und des zweiten Schmierölspeicherkörpers 132; 133 sind senkrecht zueinander ausgerichtet, wobei der zweite Schmierölspeicherkörper 133 mit einer Nase 133b versehen ist, mit der er den ersten Schmierölspeicherkörper berührt, so dass Schmieröl vom ersten auf den zweiten Schmierölspeicherkörper übertragen werden kann. Hierbei ist beabsichtigt, das gesamte gespeicherte Schmierölvolumen bedarfsgerecht auf die beiden Schmierstellen zu verteilen. Dies kann durch geeignete Dimensionierung der genannten Nase 133b, insbesondere deren Berührfläche zum ersten Schmierölspeicherkörper 132 erreicht werden. Hinzuweisen ist noch auf die Abstreifplatte 129, mit der der verhältnismäßig dünne zweite Schmierölspeicherkörper gegen Verbiegung abgestützt wird. Die Abstreifplatte 129 ist mit geringem Abstand äquidistant zur ersten Wälzfläche ausgebildet und wie die Abhebenase 128, die den zweiten Schmierölspeicherkörper ebenfalls gegen Verbiegung abstützt, vollständig am ersten Umlenkteil 121 ausgebildet. Mit der Abstreifplatte 129 können auch größere Fremdkörper von der ersten Wälzfläche entfernt werden, soweit dies nicht bereits durch den Abstreifvorsprung (Nr. 36a; Fig. 3) der Verschlussplatte bewirkt worden ist.

Fig. 8 zeigt das Überführungsteil 140 stark vergrößert. Das Überführungsteil 140 ist einstückig ausgeführt und aus Kunststoff im Spritzgussverfahren gefertigt. Das Überführungsteil 140 umfasst ein biegeverformbares Rohr 150 mit einer im Wesentlichen kreisförmigen Querschnittsform, an dessen vorderem Ende drei identische fingerartige Fortsätze 141 vorgesehen sind, die gleichmäßig über den Umfang des biegeverformbaren Rohres 150 angeordnet sind. Die fingerartigen Fortsätze 141 besitzen über ihre gesamte Länge eine U-förmige Querschnittsform mit einer Basis 144, von der je zwei U-Schenkel 145 rechtwinklig abstehen. Die Stirnflächen der U-Schenkel bilden Führungsflächen 143 für die durch das Überführungsteil 140 hindurch laufenden kugelförmigen Wälzkörper. Die Länge der U-Schenkel 145 nimmt vom freien Ende der fingerartigen Fortsätze 141 zum biegsamen Rohr hin zu, so dass die genannten Führungsflächen 143 geneigt zum Verlauf des Rücklaufdurchgangs angeordnet sind. Hierbei ist anzumerken, dass die Basis 144 der fingerartigen Fortsätze 141 parallel zum Rücklaufdurchgang ausgerichtet ist, wobei sie mit einem Anlagefortsatz 147 unmittelbar am Grund der zugeordneten Nut (Nr. 50c; Fig. 9) im Rücklaufdurchgang anliegt. Hinsichtlich der genauen Anordnung der Führungsflächen 143 bezüglich des Rücklaufdurchgangs wird auf die Ausführungen zu Fig. 9 verwiesen.

Das biegeverformbare Rohr 150 ist mit insgesamt sechs Fenstern 151 versehen, durch die dessen Biegeelastizität erhöht werden soll. Das biegeverformbare Rohr bildet somit einen flexiblen Durchgang 140a für die Wälzkörper, mit dem ein möglicher Versatz zwischen dem Rücklaufdurchgang und dem gebogenen Umlenkdurchgang ausgeglichen werden kann. Die zwischen den Fenstern 151 gebildeten Stege 152 sind in Verlängerung der U-Schenkel 145 der fingerartigen Fortsätze 141 vorgesehen, so dass die dort vorgesehenen Führungsflächen 143 für die Wälzkörper auf den Stegen 152a unterbrechungsfrei fortgesetzt werden können.

Fig. 9 zeigt einen Querschnitt eines Rücklaufdurchgangs 50 mit eingesetztem Überführungsteil 140. Der Rücklaufdurchgang 50 besitzt eine im Wesentlichen kreisförmige Querschnittsform, die mit geringem Spiel an die Wälzkörper 15 angepasst ist. Über den Umfang des Rücklaufdurchgangs 50 sind insgesamt drei Nuten 50c gleichmäßig verteilt angeordnet. Dieses Nuten 50c erstrecken sich über die gesamte Länge des Rücklaufdurchgangs 50, da dieser zusammen mit den Nuten 50c bereits beim Strangpressen des ersten Grundkörpers hergestellt und nicht mehr weiter bearbeitet wird. In den Nuten 50c ist je ein fingerartiger Fortsatz 141 des Umlenkteils 140 aufgenommen, wobei die Nuten 50c mit geringem Abstand zu diesem ausgeführt sind. An der Basis 144 eines jeden fingerartigen Fortsatzes 140 ist je ein Anlagefortsatz 147 vorgesehen, der jeweils am Grund 50d der Nut 50c anliegt. Die Nuten 50c und die Anlagefortsätze 147 sind hierbei so aufeinander abgestimmt, dass das Überführungsteil 140 mit einer geringen Vorspannung im Rücklaufdurchgang 50 aufgenommen ist. Die Breite 50f der Nuten 50c beträgt etwa 40% des Kugeldurchmessers 15a, so dass die Wälzkörper 15 abseits der Nuten 50c noch ausreichend im Rücklaufdurchgang 50 geführt sind.

Aufgrund ihres geneigten Verlaufes sind in Fig. 9 auch die Führungsflächen 143 für die Wälzkörper 15 zu erkennen. Das vordere Ende einer jeden Führungsfläche ist jeweils so weit entfernt 143a von der Mittelachse 50a des Rücklaufdurchgangs 50 angeordnet, dass sichergestellt ist, dass es versenkt in der Nut 50c angeordnet ist. Somit ist ausgeschlossen, dass die vom Rücklaufdurchgang 50 her kommenden in den gebogenen Umlenkdurchgang einlaufenden Wälzkörper 15 mit der Stirnfläche 146 der fingerartigen Fortsätze 141 kollidieren können.

Das hintere Ende der Führungsflächen an den fingerartigen Fortsätzen ist so weit entfernt 143b von der Mittelachse 50a des Rücklaufdurchgangs 50 angeordnet, dass es um einen geringen Betrag aus der zugeordneten Nut 50c herausragt. Somit ist ausgeschlossen, dass die vom gebogenen Umlenkdurchgang her kommenden in den Rücklaufdurchgang 50 einlaufenden Wälzkörper 15 mit der Stirnfläche des ersten Grundkörpers (Nr. 53a; Fig. 3) kollidieren können. Der genannte geringe Überstand ist aufgrund seiner geringen Größe in der maßstäbliche Fig. 9 nur schwer zu erkennen.

Fig. 10 zeigt eine zweite Ausführungsform der Umlenkbaugruppe 120a, bei der gegenüber der in Fig. 9 dargestellten ersten Ausführungsform 120 die fingerartigen Fortsätze 141 einstückig mit dem ersten 121 bzw. zweiten Umlenkteil 122 ausgeführt wurden. Dementsprechend entfällt bei dieser Ausführungsform das gesonderte Überführungsteil, weshalb die zweite Ausführungsform 120a etwas kostengünstiger als die erste Ausführungsform 120 ist, wobei allerdings auf die Vorteile des flexiblen Durchgangs (Nr. 140a; Fig. 8) verzichtet werden muss. Die erste Ausführungsform 120 der Umlenkbaugruppe, die im Übrigen identisch mit der zweiten Ausführungsform 120a ausgebildet ist, ist aufgrund dieser Vorteile bevorzugt.

Fig. 11 zeigt eine dritte Ausführungsform 120b der Umlenkbaugruppe, bei der das erste Wälzflächenteil 31 drehbar in der Umlenkbaugruppe 120b aufgenommen ist. Die Umlenkbaugruppe 120b umfasst zu diesem Zweck ein gesondertes Halteteil 134, in der die Ausrichtausnehmung 127 für das erste Wälzflächenteil vorgesehen ist. Das Wälzflächenteil 31 ist hierbei, wie bei allen anderen Ausführungsformen der Umlenkbaugruppe, als Profilkörper mit einer konstanten Querschnittsform ausgeführt, wobei an beiden Enden des ersten Wälzflächenteils ebene Längsstirnflächen 31 b vorgesehen sind. Die Querschnittsform des ersten Wälzflächenteils 31 ist im Wesentlichen V-formig mit einem ersten 31e und einem zweiten V-Schenkel 31f. An der Außenseite ist das Halteteil 134 mit einer Kreiszylinderfläche 134a versehen, deren Längsachse durch den Mittelpunkt der kugelförmigen Wälzkörper verläuft. Die Kreiszylinderfläche 134a liegt an einer angepassten Fläche 130 der verbleibenden Umlenkbaugruppen 120b an, so dass das erste Wälzflächenteil 31 um den Mittelpunkt der Wälzkörper drehbar bezüglich der Umlenkbaugruppe 120b ist. Durch diese Maßnahme kann ein und dieselbe Bauform der Umlenkbaugruppe 120b in verschiedenen Bauformen von Linearbewegungsvorrichtungen eingesetzt werden. Mit der beschriebenen Drehbeweglichkeit sollen hierbei den unterschiedlichen Platzverhältnissen in den verschiedenen Linearbewegungsvorrichtungen Rechnung getragen werden. Gleichwohl ist die erste Ausführungsform 120 der Umlenkbaugruppe, die im Übrigen identisch zur dritten Ausführungsform 120b der Umlenkbaugruppe ausgebildet ist, aufgrund des geringem Herstellungsaufwands bevorzugt.

## Patentansprüche

1. Linearbewebungsvorrichtung (10) mit einer ersten (30; 30a) und einer gegenüber der ersten linearbeweglichen zweiten Baugruppe (60), wobei an der ersten Baugruppe (30; 30a) wenigstens eine sich in einer Längsrichtung (11) erstreckende erste Wälzfläche (31 a) vorgesehen ist, die einer zweiten Wälzfläche (61a) gegenübersteht, die an der zweiten Baugruppe (60) vorgesehen ist, wobei zwischen der ersten und der zweiten Wälzfläche (31a; 61a) eine Reihe von Wälzkörpern (15) angeordnet ist, wobei die erste Baugruppe (30; 30a) einen einstückigen ersten Grundkörper (40) und wenigstens eine Umlenkbaugruppe (120; 120a; 120b) umfasst, wobei in dem ersten Grundkörper (40) ein Rücklaufdurchgang (50) vorgesehen ist, wobei weiter in der Umlenkbaugruppe (120; 120a; 120b) wenigstens ein gebogener Umlenkdurchgang (125) vollständig vorgesehen ist, der die erste Wälzfläche (31a) so mit dem Rücklaufdurchgang (50) verbindet, dass die Wälzkörper (15) endlos umlaufen können, wobei an der Umlenkbaugruppe (120; 120a; 120b) wenigstens ein Fortsatz (141) vorgesehen ist, der in den Rücklaufdurchgang (50) eingreift, wobei der Rücklaufdurchgang (50) vollständig und unmittelbar im ersten Grundkörper (40) vorgesehen ist, **dadurch gekennzeichnet, dass** der Fortsatz (141) der Umlenkbaugruppe (120; 120a; 120b) fingerartig sich in Längsrichtung (11) erstreckend ausgeführt ist, und wobei der Rücklaufdurchgang (50) eine an den fingerartigen Fortsatz angepasste Nut (50c) aufweist, in die der genannte Fortsatz (141) eingreift, wobei wenigstens zwei fingerartige Fortsätze (141) vorgesehen sind, die im Wesentlichen gleichmäßig über den Umfang des zugeordneten Rücklaufdurchgangs (50) verteilt angeordnet sind, wobei sie jeweils in eine gesonderte Nut (50c) eingreifen.

2. Linearbewegungsvorrichtung nach Anspruch 1,
**dadurch gekennzeichnet, dass** sich die angepasste Nut (50c) über die gesamte Länge des Rücklaufdurchgangs (50) erstreckt, wobei der Rücklaufdurchgang (50) vorzugsweise über die gesamte Länge ein im Wesentlichen konstantes Querschnittsprofil aufweist.

3. Linearbewegungsvorrichtung nach Anspruch 2,
**dadurch gekennzeichnet, dass** Kugeln als Wälzkörper (15) vorgesehen sind, wobei die Breite (50f) der Nuten (50c) zwischen 10% und 60% des Kugeldurchmessers (15a) beträgt.

4. Linearbewegungsvorrichtung nach einem der vorstehenden Ansprüche,
**dadurch gekennzeichnet, dass** der fingerartige Fortsatz (141) wenigstens eine Führungsfläche (143) aufweist, die den Wälzkörpern (15) zugewandt ist, wobei die Führungsfläche (143) an dem der Umlenkbaugruppe (120; 120a; 120b) abgewandten vorderen Ende des fingerartigen Fortsatzes (141) so weit versenkt in der Nut (50c) angeordnet ist, dass sie nicht in Kontakt mit den Wälzkörpern (15) gelangen kann.

5. Linearbewegungsvorrichtung nach Anspruch 4,
**dadurch gekennzeichnet, dass** die Führungsfläche (143) geneigt zum Verlauf des Rücklaufdurchgangs (50) ausgeführt ist, wobei die Führungsfläche (143) am vorderen Ende des fingerartigen Fortsatzes (141) weiter entfernt von der Mittenachse (50a) des Rücklaufdurchgangs (50) angeordnet ist als am gegenüberliegenden hinteren Ende des fingerartigen Fortsatzes (141).

6. Linearbewegungsvorrichtung nach Anspruch 5,
**dadurch gekennzeichnet, dass** kugelförmige Wälzkörper (15) vorgesehen sind, wobei der fingerartige Fortsatz (141) eine U-förmige Querschnittsform mit einer Basis (144) und zwei U-Schenkeln (145) aufweist, an deren Stirnseiten je eine Führungsfläche (143) vorgesehen ist, wobei Länge der U-Schenkel (145) vom vorderen zum hinteren Ende der fingerartigen Fortsätze (141), vorzugsweise gleichmäßig, zunimmt.

7. Linearbewegungsvorrichtung nach einem der vorstehenden Ansprüche, insbesondere nach den Ansprüchen 3 bis 5,
**dadurch gekennzeichnet, dass** der fingerartige Fortsatz (141) wenigstens abschnittsweise am Grund (50d) der zugeordneten Nut (50c) anliegt.

8. Linearbewegungsvorrichtung nach einem der vorstehenden Ansprüche,
**dadurch gekennzeichnet, dass** die Wälzkörper (15) Kugeln sind, wobei genau drei fingerartige Fortsätze (141) vorgesehen sind.

9. Linearbewegungsvorrichtung nach Anspruch 8,
**dadurch gekennzeichnet, dass** alle fingerartigen Fortsätze (141) und die zugeordneten Nuten (50c) identisch ausgeführt sind.

10. Linearbewegungsvorrichtung nach einem der vorstehenden Ansprüche,
**dadurch gekennzeichnet, dass** ein biegeverformbares Rohr (150) vorgesehen ist, das einen flexiblen Durchgang (140a) für die Wälzkörper (15) begrenzt, wobei der fingerartige Fortsatz (141) an einem vorderen Ende des biegeverformbaren Rohres (150) vorgesehen ist, wobei das gegenüberliegende hintere Ende des biegeverformbaren Rohres (150) an der Umlenkbaugruppe (120; 120b) festgelegt ist, so dass der flexible Durchgang (140a) in den zugeordneten Umlenkdurchgang (125) mündet.

11. Linearbewegungsvorrichtung nach Anspruch 10,
**dadurch gekennzeichnet, dass** das biegeverformbare Rohr (150) wenigstens ein radiales Fenster (151) aufweist.

12. Linearbewegungsvorrichtung nach Anspruch 11,
**dadurch gekennzeichnet, dass** mehrere radiale Fenster (151) verteilt über den Umfang des biegeverformbaren Rohres (150) angeordnet sind, so dass die Fenster Stege (152) im biegeverformbaren Rohr (150) definieren, wobei die Stege (152) in Verlängerung der fingerartigen (141) Fortsätze angeordnet sind.

13. Linearbewegungsvorrichtung nach einem der Ansprüche 10 bis 12,
**dadurch gekennzeichnet, dass** der fingerartige Fortsatz (141) und das biegeverformbare Rohr (150) einstückig in Form eines gesonderten Überführungsteils (140) ausgebildet sind.

14. Linearbewegungsvorrichtung nach einem der Ansprüche 10 bis 13,
**dadurch gekennzeichnet, dass** das biegeverformbare Rohr (150) in einer konischen Ausnehmung (126) der Umlenkbaugruppe (120; 120b) aufgenommen ist.

15. Linearbewegungsvorrichtung nach Anspruch 14,
**dadurch gekennzeichnet, dass** eine dem fingerartigen Fortsatz (141) benachbarte Stirnfläche (150a) des biegeverformbaren Rohres (150) an dem ersten Grundkörper (40) anliegt.

## Claims

1. Linear movement apparatus (1) having a first assembly (30; 30a) and a second assembly (60) which can be moved linearly with respect to the first assembly, at least one first rolling face (31a) which extends in a longitudinal direction (11) being provided on the first assembly (30; 30a), which first rolling face (31a) lies opposite a second rolling face (61a) which is provided on the second assembly (60), a row of rolling bodies (15) being arranged between the first and the second rolling face (31a; 61a), the first assembly (30; 30a) comprising a single-piece first basic body (40) and at least one deflection assembly (120; 120a; 120b), a return passage (50) being provided in the first basic body (40), at least one bent deflection passage (125) being provided completely, furthermore, in the deflection assembly (120; 120a; 120b), which deflection passage (125) connects the first rolling face (31a) to the return passage (50) in such a way that the rolling bodies (15) can circulate endlessly, at least one projection (141) which engages into the return passage (50) being provided on the deflection assembly (120; 120a; 120b), the return passage (50) being provided completely and directly in the first basic body (40), **characterized in that** the projection (141) of the deflection assembly (120; 120a; 120b) being configured so as to extend in the longitudinal direction (11) in a finger-like manner, and the return passage (50) having a groove (50c) which is adapted to the finger-like projection and into which the said projection (141) engages, at least two finger-like projections (141) being provided which are arranged distributed substantially uniformly over the circumference of the associated return passage (50), the said projections (141) engaging in each case into a separate groove (50c).

2. Linear movement apparatus according to Claim 1, **characterized in that** the adapted groove (50c) extends over the entire length of the return passage (50), the return passage (50) preferably having a substantially constant cross-sectional profile over the entire length.

3. Linear movement apparatus according to Claim 2, **characterized in that** balls are provided as rolling bodies (15), the width (50f) of the grooves (50c) being between 10% and 60% of the ball diameter (15a).

4. Linear movement apparatus according to one of the preceding claims, **characterized in that** the finger-like projection (141) has at least one guide face (143) which faces the rolling bodies (15), the guide face (143) at that front end of the finger-like projection (141) which faces away from the deflection assembly (120; 120a; 120b) being arranged in a manner which is countersunk in the groove (50c) to such an extent that said guide face (143) cannot come into contact with the rolling bodies (15).

5. Linear movement apparatus according to Claim 4, **characterized in that** the guide face (143) is configured such that it is inclined with respect to the course of the return passage (50), the guide face (143) at the front end of the finger-like projection (141) being arranged further away from the centre axis (50a) of the return passage (50) than at that rear end of the finger-like projection (141) which lies opposite.

6. Linear movement apparatus according to Claim 5, **characterized in that** ball-shaped rolling bodies (15) are provided, the finger-like projection (141) having a U-shaped cross-sectional shape with a base (144) and two U limbs (145), at the end sides of which in each case one guide face (143) is provided, the length of the U limbs (145) increasing, preferably uniformly, from the front to the rear end of the finger-like projections (141).

7. Linear movement apparatus according to one of the preceding claims, in particular according to Claims 3 to 5, **characterized in that** the finger-like projection (141) bears at least in sections against the bottom (50d) of the associated groove (50c).

8. Linear movement apparatus according to one of the preceding claims, **characterized in that** the rolling bodies (15) are balls, exactly three finger-like projections (141) being provided.

9. Linear movement apparatus according to Claim 8, **characterized in that** all the finger-like projections (141) and the associated grooves (50c) are of identical configuration.

10. Linear movement apparatus according to one of the preceding claims, **characterized in that** a flexurally deformable tube (150) is provided which delimits a flexible passage (140a) for the rolling bodies (15), the finger-like projection (141) being provided at a front end of the flexurally deformable tube (150), that rear end of the flexurally deformable tube (150) which lies opposite being fixed on the deflection assembly (120; 120b), with the result that the flexible passage (140a) opens into the associated deflection passage (125).

11. Linear movement apparatus according to Claim 10, **characterized in that** the flexurally deformable tube (150) has at least one radial window (151).

12. Linear movement apparatus according to Claim 11, **characterized in that** a plurality of radial windows (151) are arranged distributed over the circumference of the flexurally deformable tube (150), with the result that the windows define webs (152) in the flexurally deformable tube (150), the webs (152) being arranged in an extension of the finger-like projections (141).

13. Linear movement apparatus according to one of Claims 10 to 12, **characterized in that** the finger-like projection (141) and the flexurally deformable tube (150) are configured integrally in the form of a separate transfer part (140).

14. Linear movement apparatus according to one of Claims 10 to 13, **characterized in that** the flexurally deformable tube (150) is received in a conical recess (126) of the deflection assembly (120; 120b).

15. Linear movement apparatus according to Claim 14, **characterized in that** an end face (150a) of the flexurally deformable tube (150) bears against the first basic body (40), which end face (150a) is adjacent to the finger-like projection (141).

## Revendications

1. Dispositif de déplacement linéaire (10) comprenant un premier module (30 ; 30a) et un deuxième module (60) déplaçable linéairement par rapport au premier, dans lequel au moins une première face de roulement (31a) s'étendant dans la direction longitudinale (11) est prévue sur le premier module (30 ; 30a), laquelle est en regard d'une deuxième face de roulement (61a), qui est prévue sur le deuxième module (60), une série de corps de roulement (15) étant disposée entre la première et la deuxième face de roulement (31a ; 61a), le premier module (30 ; 30a) comprenant un premier corps de base (40) d'une seule pièce et au moins un module de déflexion (120 ; 120a ; 120b), un passage de retour (50) étant prévu dans le premier corps de base (40), et en outre au moins un passage de déflexion courbe (125) étant prévu complètement dans le module de déflexion (120 ; 120a ; 120b), lequel relie la première face de roulement (31a) au passage de retour (50) de telle sorte que les corps de roulement (15) puissent circuler sans fin, au moins une saillie (141) étant prévue sur le module de déflexion (120 ; 120a ; 120b), laquelle s'engage dans le passage de retour (50), le passage de retour (50) étant prévu complètement et directement dans le premier corps de base (40),
**caractérisé en ce que** la saillie (141) du module de déflexion (120 ; 120a ; 120b) est réalisée de manière à s'étendre en forme de doigt dans la direction longitudinale (11), et le passage de retour (50) présente une rainure (50c) adaptée à la saillie en forme de doigt, dans laquelle s'engage ladite saillie (141), au moins deux saillies en forme de doigt (141) étant prévues, lesquelles sont disposées de manière répartie essentiellement uniformément sur la périphérie du passage de retour associé (50), et s'engagent chacune dans une rainure séparée (50c).

2. Dispositif de déplacement linéaire selon la revendication 1,
**caractérisé en ce que** la rainure adaptée (50c) s'étend sur toute la longueur du passage de retour (50), le passage de retour (50) présentant de préférence sur toute la longueur un profil en section transversale essentiellement constant.

3. Dispositif de déplacement linéaire selon la revendication 2,
**caractérisé en ce que** des billes sont prévues en tant que corps de roulement (15), la largeur (50f) des rainures (50c) étant comprise entre 10% et 60% du diamètre des billes (15a).

4. Dispositif de déplacement linéaire selon l'une quelconque des revendications précédentes,
**caractérisé en ce que** la saillie en forme de doigt (141) présente au moins une face de guidage (143), qui est tournée vers les corps de roulement (15), la face de guidage (143) étant disposée de manière enfoncée dans la rainure (50c) à l'extrémité avant de la saillie en forme de doigt (141) opposée au module de déflexion (120 ; 120a; 120b) dans une mesure telle qu'elle ne puisse pas parvenir en contact avec les corps de roulement (15).

5. Dispositif de déplacement linéaire selon la revendication 4,
**caractérisé en ce que** la face de guidage (143) est réalisée de manière inclinée par rapport à l'allure du passage de retour (50), la face de guidage (143) étant disposée à l'extrémité avant de la saillie en forme de doigt (141) de manière plus éloignée de l'axe médian (50a) du passage de retour (50) qu'à l'extrémité arrière opposée de la saillie en forme de doigt (141).

6. Dispositif de déplacement linéaire selon la revendication 5,
**caractérisé en ce que** des corps de roulement en forme de billes (15) sont prévus, la saillie en forme de doigt (141) présentant une forme en section transversale en forme de U avec une base (144) et deux branches du U (145), sur les côtés frontaux desquelles est à chaque fois prévue une face de guidage (143), la longueur des branches du U (145) augmentant depuis l'extrémité avant jusqu'à l'extrémité arrière de la saillie en forme de doigt (141), de préférence régulièrement.

7. Dispositif de déplacement linéaire selon l'une quelconque des revendications précédentes, en particulier selon les revendications 3 à 5,
**caractérisé en ce que** la saillie en forme de doigt (141) s'applique au moins en partie sur la base (50d) de la rainure associée (50c).

8. Dispositif de déplacement linéaire selon l'une quelconque des revendications précédentes,
**caractérisé en ce que** les corps de roulement (15) sont des billes, exactement trois saillies en forme de doigt (141) étant prévues.

9. Dispositif de déplacement linéaire selon la revendication 8,
**caractérisé en ce que** toutes les saillies en forme de doigt (141) et les rainures associées (50c) sont réalisées de manière identique.

10. Dispositif de déplacement linéaire selon l'une quelconque des revendications précédentes,
**caractérisé en ce qu'**un tube déformable par flexion (150) est prévu, lequel limite un passage flexible (140a) pour les corps de roulement (15), la saillie en forme de doigt (141) étant prévue à l'extrémité avant du tube déformable par flexion (150), l'extrémité arrière opposée du tube déformable par flexion (150) étant fixée au module de déflexion (120 ; 120b), de sorte que le passage flexible (140a) débouche dans le passage de déflexion associé (125).

11. Dispositif de déplacement linéaire selon la revendication 10,
**caractérisé en ce que** le tube déformable par flexion (150) présente au moins une fenêtre radiale (151).

12. Dispositif de déplacement linéaire selon la revendication 11,
**caractérisé en ce que** plusieurs fenêtres radiales (151) sont disposées de manière répartie sur la périphérie du tube déformable par flexion (150), de sorte que les fenêtres définissent des nervures (152) dans le tube déformable par flexion (150), les nervures (152) étant disposées dans le prolongement des saillies en forme de doigt (141).

13. Dispositif de déplacement linéaire selon l'une quelconque des revendications 10 à 12,
**caractérisé en ce que** la saillie en forme de doigt (141) et le tube déformable par flexion (150) sont réalisés d'une seule pièce en forme de pièce de transfert séparée (140).

14. Dispositif de déplacement linéaire selon l'une quelconque des revendications 10 à 13,
**caractérisé en ce que** le tube déformable par flexion (150) est reçu dans un logement conique (126) du module de déflexion (120 ; 120b).

15. Dispositif de déplacement linéaire selon la revendication 14,
**caractérisé en ce qu'**une face frontale (150a) adjacente à la saillie en forme de doigt (141) du tube déformable par flexion (150) s'applique contre le premier corps de base (40).
